# EUROPEAN PATENT APPLICATION

(11) **EP 3 001 328 A2**
(43) Date of publication of application: **30.03.2016**
(21) Application number: 15186967.4
(22) Date of filing: 25.09.2015
(51) Int. Cl.: G06F 17/21

(54) **SELECTABLE STYLES FOR TEXT MESSAGING SYSTEM FONT SERVICE PROVIDERS**

(30) Priority: 25.09.2014 US 201462055404 P
(71) Applicant: Monotype Imaging Inc., Woburn, MA 01801 (US)
(72) Inventor: Monotype Imaging Inc., Woburn, MA 01801 (US)
(74) Representative: Slingsby Partners LLP

(57) **Abstract**

A system includes a computing device that includes a memory configured to store instructions. The system also includes a processor to execute the instructions to perform operations that include receiving at a font service provider, a request from a user device for font information for presenting a text message with embedded immutable style information and that includes mutable content on the user device. Operations also include preparing one or more files that include data representative of the font information. Operations also include sending the one or more data files to the user device to provide the font information for presenting within a text message with the embedded immutable style information and included mutable content.

## Description

### CLAIM OF PRIORITY

This application claims benefit of priority under 35 U.S.C. § 119(e) to U.S. Provisional Patent Application Serial No. 62/055,404 filed on September 25, 2014, the entire contents of which are hereby incorporated by reference.

### BACKGROUND

This description relates to embedding style into text messaging systems, for example, to present recognizable brands in individual messages. Along with providing selectable brand styles for end user selection, feedback data can be provided to brand owners for various analysis, brand adjustment, etc.

Over the past years, text messaging has continued to evolve towards becoming the preferred manner of communicating, among the younger segment of our society, in particular. Along with this portion of users, older individuals continue to become increasingly comfortable with using text messaging services and operating with ever increasing numbers of text messages per day. With this ever increasing usage growth of this technology, more and more potential consumers are using text messaging services in professional aspects of their lives along with their personal lives.

### SUMMARY

The systems and techniques described herein can aid in harmoniously presenting text messages and user-selectable styles that may be developed by individual, groups, well established brands, etc. Rather than presenting advertisements absent any input from users, style features (e.g., fonts, colors, graphics, etc.) closely associated with a brand are visually presented with the message, thereby reducing the viewer's ability to consciously or subconsciously ignore the brand (in contrast to ignoring advertisements positioned on the viewer's peripheral, often referred to as "banner blindness"). Along with the stylistic attributes of a brand, other information may be embedded into the text message. Product or service information, links to associated electronic assets (e.g., websites, webpages, etc.) and other related information may be presented for improving the engagement with viewers.

In one aspect, a computing device implemented method includes receiving at a font service provider, a request from a user device for font information for presenting a text message with embedded immutable style information and that includes mutable content on the user device. The method also includes preparing one or more files that include data representative of the font information. The method also includes sending the one or more data files to the user device to provide the font information for presenting within a text message with the embedded immutable style information and included mutable content.

Implementations may include one or more of the following features. The request from the user device may identify one or more fonts for presenting the text message with the embedded immutable style information and included mutable content. The request from the user device may be sent by a software agent executed by the use device. Preparing the one or more files that include data representative of the font information may include determining whether to produce one or more character subsets. Preparing the one or more files that include data representative of the font information may include producing character subsets in an incremental manner. Preparing the one or more files that include data representative of the font information may include determining the amount of percentage of font characters currently supported by the user device. Data representing remaining font characters may be included in the one or more files if the percentage exceeds a predefined threshold. The immutable style information embedded in the text message may provide access to audio content, video content or audio and video content. The immutable style information embedded in the text message may advertise a brand. The immutable style information embedded in the text messages may access an application being executed by the user device. The immutable style information embedded in the text messages may initiate execution of an application at the user device. Feedback may be provided to the font service provider regarding the use of the font information in the text message.

In another aspect, a system includes a computing device that includes a memory configured to store instructions. The system also includes a processor to execute the instructions to perform operations that include receiving at a font service provider, a request from a user device for font information for presenting a text message with embedded immutable style information and that include mutable content on the user device. Operations also include preparing one or more files that include data representative of the font information. Operations also include sending the one or more data files to the user device to provide the font information for presenting within a text message with the embedded immutable style information and included mutable content.

Implementations may include one or more of the following features. The request from the user device may identify one or more fonts for presenting the text message with the embedded immutable style information and included mutable content. The request from the user device may be sent by a software agent executed by the use device. Preparing the one or more files that include data representative of the font information may include determining whether to produce one or more character subsets. Preparing the one or more files that include data representative of the font information may include producing character subsets in an incremental manner. Preparing the one or more files that include data representative of the font information may include determining the amount of percentage of font characters currently supported by the user device. Data representing remaining font characters may be included in the one or more files if the percentage exceeds a predefined threshold. The immutable style information embedded in the text message may provide access to audio content, video content or audio and video content. The immutable style information embedded in the text message may advertise a brand. The immutable style information embedded in the text messages may access an application being executed by the user device. The immutable style information embedded in the text messages may initiate execution of an application at the user device. Feedback may be provided to the font service provider regarding the use of the font information in the text message.

In another aspect, one or more computer readable media storing instructions that are executable by a processing device, and upon such execution cause the processing device to perform operations that include receiving at a font service provider, a request from a user device for font information for presenting a text message with embedded immutable style information and that includes mutable content on the user device. Operations also include preparing one or more files that include data representative of the font information. Operations also include sending the one or more data files to the user device to provide the font information for presenting within a text message with the embedded immutable style information and included mutable content.

Implementations may include one or more of the following features. The request from the user device may identify one or more fonts for presenting the text message with the embedded immutable style information and included mutable content. The request from the user device may be sent by a software agent executed by the use device. Preparing the one or more files that include data representative of the font information may include determining whether to produce one or more character subsets. Preparing the one or more files that include data representative of the font information may include producing character subsets in an incremental manner. Preparing the one or more files that include data representative of the font information may include determining the amount of percentage of font characters currently supported by the user device. Data representing remaining font characters may be included in the one or more files if the percentage exceeds a predefined threshold. The immutable style information embedded in the text message may provide access to audio content, video content or audio and video content. The immutable style information embedded in the text message may advertise a brand. The immutable style information embedded in the text messages may access an application being executed by the user device. The immutable style information embedded in the text messages may initiate execution of an application at the user device. Feedback may be provided to the font service provider regarding the use of the font information in the text message.

These and other aspects, features, and various combinations may be expressed as methods, apparatus, systems, means for performing functions, program products, etc.

Other features and advantages will be apparent from the description and the claims.

### DESCRIPTION OF DRAWINGS

FIG. 1 illustrates a smartphone presenting a text message that uses the style of a brand.
FIG. 2 is a block diagram of components of the smartphone presented in FIG. 1.
FIG. 3 is a block diagram of an Internet-based computer network that distributes style information for use with text messaging services.
FIG. 4 is a block diagram of a telecommunication core network in communication with base stations.
FIG. 5 illustrates executable instructions for a text message that incorporates styles of a brand.
FIG. 6 illustrates a template for a stylized text message.
FIG. 7 illustrates text message templates.
FIG. 8 illustrates the connection between a website and a text message utilizing the website's style.
FIG. 9 illustrates video and audio content linked to stylized text messages.
FIG. 10 illustrates data from a mobile application being embedded into the style of a text message.
FIG. 11 illustrates launching an audio player through interactions with a text message.
FIG. 12 illustrates launching an e-commerce application through interactions with a text message.
FIG. 13 illustrates access being granted to a brand style for text messaging based upon a product purchase.
FIG. 14 illustrates a user device interface for managing and using selected styles for text messaging.
FIG. 15 illustrates a user device interface for managing stylized graphics for text messaging.
FIGs. 16-18 illustrates stylized text message that include interactive features.
FIG. 19 is a flowchart of operations of a font service manager.
FIG. 20 is an example of a computing device and a mobile computing device that can be used to implement the techniques described here.

### DETAILED DESCRIPTION

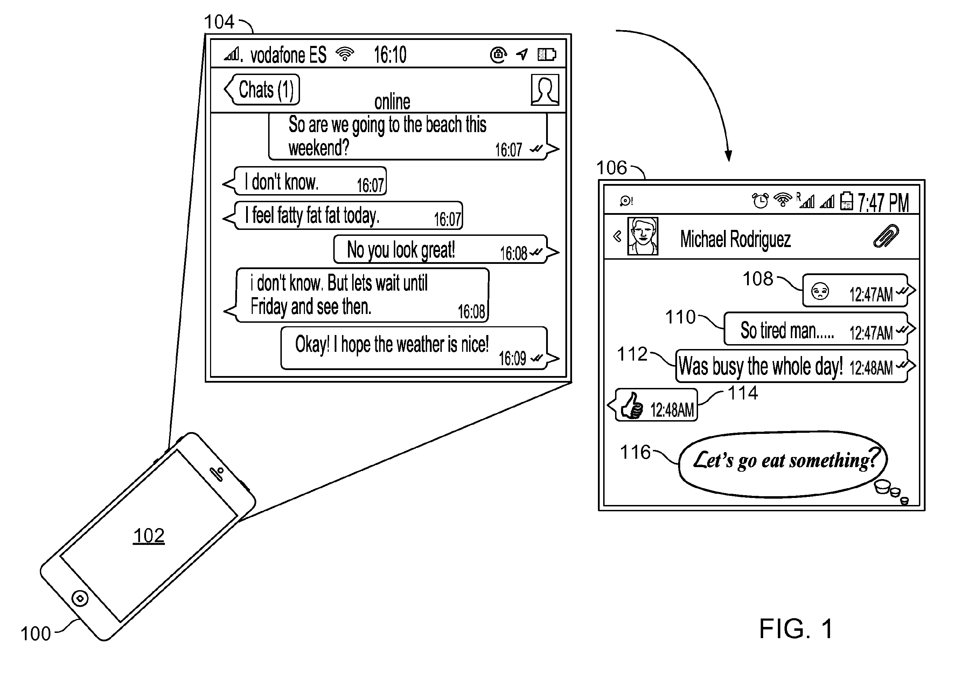

Referring to FIG. 1, a computing device (e.g., a smartphone 100) includes a display 102 that presents an interface 104 for exchanging text messages with the user of another device (e.g., a similar smartphone or other type of computing device). In general, contrasting colors, different positions on the interface, etc. allow the viewer to quickly determine which text message originated at their device and which messages have been received from the other user's device. For both users, the text messages employ the same font and include text content. As such, focusing on the stream of messages, a user simply views the message exchange.

By incorporating additional content into the message, additional information may be provided to the users as they exchange messages (for example, graphical information can be embedded into a message to convey information related to or unrelated to the message content). Such additional material may originate from a variety of sources, for example, graphical features associated with a brand of an entity (e.g., commercial company) may be incorporated into the messaging. Along with producing more eye-catching messages, such additional material may also assist the owner of the brand. By recognizing the stylistic features, the brand is exposed to the users as they focus upon the messages being exchanged. Further, by allowing the use of a brand style to propagate to others (e.g., a recipient of a message infused with the style of a brand can be allowed to send messages that use the brand style), text message users in effect become an advertising source for the brand.

In the illustrated example, another interface 106 is presented on the smartphone 100 that allows text messages to include stylistic features of commercial brands and other sources. In this example, a series of text messages 108-112 are received by the smartphone 100. Two of the messages 110, 112 include just text entered by the sender while another message 108 uses an icon to represent an emotion (e.g., that the user is tired) and is absent any text (often referred to as "emoticons"). The user of the device 100 first sends a reply message 114 that similarly uses an icon to convey an emotion. The sender that initiated the text message exchange then sends a message 116 that includes textual content that employs the stylistic brand features associated with the Reese's Peanut Butter Cup of the Hershey Company (of Hershey Pennsylvania). Through the use of the brand's style, multiple messages may be conveyed by the single text message 116. For example, along with the message provided by the textual content (e.g., asking if the other user is hungry), the message 116 can also be suggesting a food of interest. By using this brand style, the message 116 can be considered as advertising the brand (e.g., Reese's Peanut Butter Cups) based on instructions from the message creator (e.g., the brand style is user-selected for message creation). Further, embedded within the message, the brand is more likely to be noticed by the users compared to brand information (or advertisement material) being presented outside of the message listing (e.g., banner advertisements located on the periphery of the listing).

These stylistic features can provide various types of information to a viewer; for example pictures, video, etc. types of stylistic features can provide style information associated with the imagery of a brand. One or more particular fonts associated with the brand can be a stylistic feature that provides visual style information of the brand to a viewer. A jingle, audible slogan, etc., or other similar stylistic feature (provided by one or more files, etc.) can provide audible stylistic information to a viewer. In this example, style features are associated with a particular product of a brand owner, however other sources may provide such stylistic features. For example, various types of entities associated with products, services, etc. may provide a brand style. Stylistic features may also be developed by individuals not associated with a product or service and may simply develop as stylistic effects on their own. By allowing text messaging users to somewhat control the distribution of brand information, brand knowledge may be distributed among large numbers of text message users (e.g., by being circulated rapidly over the Internet) and potentially advertise the brand in a viral manner compared to conventional advertisement campaigns.

Along with the brand style, other information may be conveyed through the use of such styles. For example, locations associated with brands may be subliminally suggested by the appearance of the brand style. With reference to the illustrated example, the sender and/or recipient of the text message 116 may associate a particular location (e.g., candy store, ice cream shop, etc.) with the presented brand. Along with reducing the effects of banner-blindness, smaller displays (e.g., of mobile devices) may be better suited for presenting the brand styles within messages compared to other locations of the display (which may not be easily readable by the user of a mobile device). With user interaction needed (e.g., to select a brand style for embedding), users are given an option whether to "opt in" or "opt out" of allowing such style information to take part in text messaging conversations.

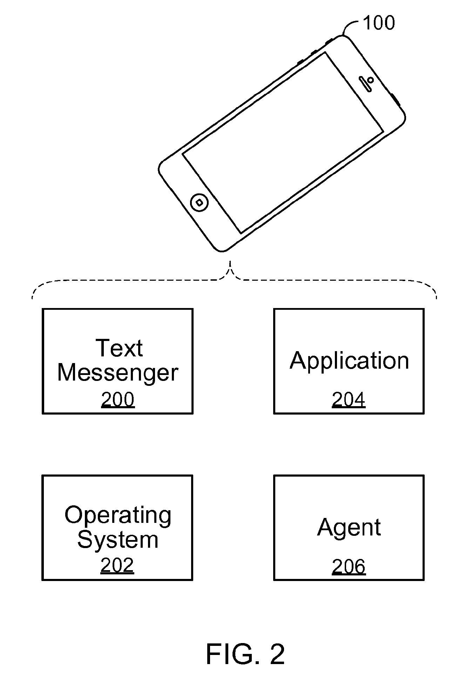

Referring to FIG. 2, various architectures, processes, etc. may be employed to use style information (e.g., brand styles) in text messages. In this particular example, a text messenger 200 is executed by the smartphone 100 and can provide various types of functionality, such as creating, editing, etc. text messages, along with style-based operations to embed style information and related data into text messages. Information may also be exchanged with other portions of the smartphone 100 (e.g., an operating system 202, one or more applications being executed by the device (e.g., an application 204), one or more applications awaiting execution (e.g., stored on the device), etc.). In some arrangements, the text messenger 200 may execute in concert with a web browser or other applications for sending and receiving style information with other computing devices (e.g., other smartphones). For example, information associated with brand styles may be downloaded from remotely located computing devices just as messages that contain style information may be sent to other devices. Still further, recently developed styles (e.g., a style produced by an individual) may be uploaded to a remotely located server to allow access to the style by others. In some arrangements, other functionality may be provided to assist operations of the text messenger 200. For example, information representing different fonts may be monitored to determine if the appropriate fonts are present at the smartphone. If a particular style is selected for creating messages and a needed font is not present at the smartphone, the lacking font can be detected and corrective actions taken to attain the missing font. One or more techniques can be used to monitor the style features present at the smartphone to take steps to collect needed information. For example, a software agent 206 may be executed by the smartphone to monitor residing fonts and other types of features (e.g., graphics, etc.) associated with embedding style information into text messages. If font information (or other types of style information) is detected as missing, one or more operations may be executed by the agent 206 either alone or in concert with the smartphone 100 in order to take corrective action. For example, the agent 206 may initiate the sending of a request for attaining the appropriate font information to support the embedding of the selected style into one or more text messages. Such software agents can be considered as software modules that are executable in a substantially autonomous manner. For example, upon be delivered to the smartphone 100, a software agent may operate without considerable user interaction. By operating in a somewhat flexible manner, the software agent can adaptively identify needed fonts, font characters, graphics, etc. for creating and presenting text messages. Operations of the agent may also include monitoring the user interactions, for example, with the text messenger 200. For example, the number of instances that particular style is selected for use can be determined from commands (e.g., retrieve style) initiated by the user. In some arrangements, the software agent 206 may execute in a substantially continuous manner.

Along with creating text messages for delivery and presenting received text messages, the text messenger 200 may provide other functionality for using styles, such as brand styles, with text messaging. For example, multiple styles may be stored (in memory) and managed by the text messenger 200. From a received message (that includes style information), other messages may be created that use the style information (e.g., style features may be stored and later retrieved to create a new message that employs some or all of the features). Along with allowed styles to be created, edited, deleted, stored, etc., the text messenger 200 may request style information, style features (e.g., fonts, graphics) etc., as needed. For example, style information, style features, etc. may be requested from external sources and stored on the user device (and retrieved as needed to prepare a message). One or more techniques and methodologies may be implemented for attaining such information. For example, font information may be provided in an incremental manner (e.g., as font characters are needed) from one or more locations (e.g., remotely located servers) using transfer techniques as described in "Font Data Streaming", United States Patent Application Serial No. 12/457,792 filed on June 22, 2009, the entire contents of which are hereby incorporated by reference.

Along with the ability to download font information along with other types of style information, the smartphone 100 may also execute operations to provide style information to other devices, locations, etc. For example, upon creating style information that may be embedded into a text message, data may be uploaded to other locations for various activities such as storing the style information, allowing it to be used by other devices for presenting stylized messages, etc. The text messenger 200 may also interact with one or more applications being executed by the smartphone. Through such interactions, the text messenger can exchange data with the application (e.g., for using the data with a stylized text message). The execution of an application (e.g., application 204) can also be initiated through operations of the text messenger 200. In some arrangements, the text messenger 200 may produce a stylized message that includes objects (e.g., radio buttons, links, etc.) that allow viewers of the message to initiate the execution of an application located on the viewing device (e.g., a smartphone) or other device (e.g., a remotely located server in communication with a viewing device).

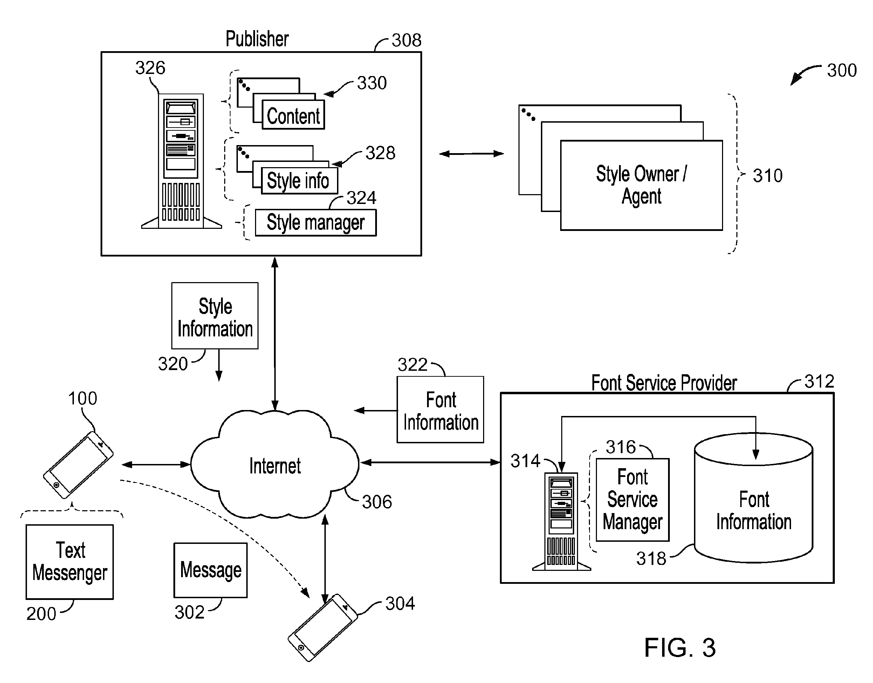

Referring to FIG. 3, a computing environment 300 is presented that is capable of providing and managing the use of style information (e.g. brand styles) in text messaging applications and systems. For example, style information can be embedded into messages exchanged between user devices. While text messages are referred to through this disclosure, various types of messaging techniques may be employed; for example, short message service (SMS) messaging, instant messaging services (e.g., over-the-top (OTT) messaging), etc. and other types of text based communications may be utilized. As illustrated, a stylized text message 302 can be created by the text messenger 200 of the smartphone 100, using locally stored style information, and sent to another smartphone 304 (via the Internet 306). To manage the use of the style information (e.g., by the smartphones 100 and 304), a publisher 308 is included in the environment 300 that interfaces with style owners 310, such as entities that own a particular brand whose style information, features, etc. can be embedded into text messages. For example, particular fonts, graphics, colors, etc. may be used to develop a brand for a well-known product or service. This stylistic brand information can be provided by an owner of the brand in order to allow the publisher 308 to propagate the brand among many users (e.g., to increase the visibility of the brand for potential customers, geographical regions, etc.). In some instances, the style owners may use a third party (e.g., an agent) to assist with developing campaigns, policing brands, etc. and may authorize this party to interact with the publisher 308 on the style owner's behalf (e.g., authorize an agent to send style information, style features, etc. to a publisher). In some instances, the style owners may have created some or all of the features of the style. As such, along with using styles of products present in the marketplace for considerable time periods, some relatively recently developed styles may be received by the publisher 308 directly from the creator, developer, etc. In some instances, a publisher may develop and distribute message styles for gain (e.g., profit). For example, message styles may depict particular hobbies, activities (e.g., sports, games, etc.), familiar and recognizable nature sites for hiking, woodworking, photography, motorsports, fishing, sailing, music, and various other topics and areas of interest.

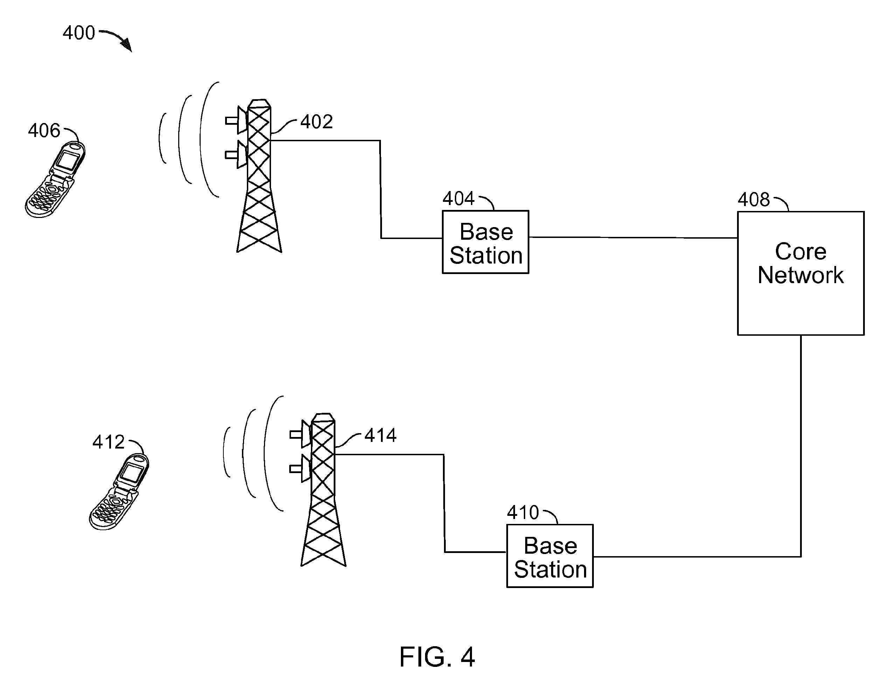

Referring briefly to FIG. 4, other types of telecommunication networks may be utilized for exchanging messages. As illustrated in the figure, text messaging services such as short message services (SMS) may be provided by a radio access network (RAN) 400 that includes a conventional antenna tower 402 capable of transmitting and receiving electromagnetic signals that are provided from or to a base station 404. One or more signaling techniques and standards may be implemented by the base station 404 to establish communication links (via the antenna tower 402) with user devices such as a cellular telephone 406. For example, techniques and standards associated with the Universal Mobile Telecommunications System (UMTS), code division multiple access (CDMA), wideband (W-CDMA), etc. may be implemented such that multiple user devices may establish communication links and access the base station 404. A core network 408 (e.g., a mobile switching center) is connected to the base station 404 for exchanging messages with other user devices. For example, another base station 410 is connected to the core network 408 for allowing message exchanging with another cellular telephone 412 (via another antenna tower 414).

Returning to FIG. 3, along with interacting with style owners (or their agents), the publisher 308 may interact with other entities regarding style information. For example, a font service provider 312 can provide font information for presenting stylized messages. In some instances, the font information may be provided to the publisher 308, while in other instances the font service provider 312 may provide font information as needed to user devices (e.g., a recipient smartphone via the Internet 306). In the illustrated architecture, the font service provider 312 includes a server 314 that can execute a font service manager 316 (e.g., implemented in software, hardware, or a combination) that manages the various fonts and related information that can be provided to other devices and components of the environment 300 (or external to the environment). Font libraries and libraries of font information may be stored in a storage device 318 (e.g., one or more hard drives, CD-ROMs, disk arrays, etc.) on site (at the font service provider 312) or offsite (e.g., implementing cloud-based storage architectures). Being accessible by a server 314, the libraries may be used, along with information provided (e.g., included in a request message from the smartphone 100), to attain the appropriate font information. Illustrated as being stored in a single storage device 318, the font service provider 312 may also use numerous storage techniques and devices to retain collections of fonts and related font information (e.g., fonts for multiple languages, styles, etc.). The font service provider 312 may also access font information at separate locations as needed. For example, along with identifying language fonts potentially needed for the smartphone 100 and other user devices, the server 314 may also be capable of collecting fonts associated with other languages, etc. from one or more sources external to the font service provider 312 (e.g., via the Internet 306). To manage the fonts, a database (or other technique for structuring and storing data) can be stored at the font service provider 312 (e.g., on the storage device 318) and include records that represent fonts and related information. Other functionality may also be provided; for example, the font service provider 312 may perform operations (e.g., tracking, monitoring, etc.) regarding the font information to be sent, preserved, used, etc. For example, records may be stored (for future use) that reflect particular fonts that have been requested from, provided to a computing device, etc.

To convey a text message that includes style information to a recipient device (or multiple devices), one or more techniques may be employed. For example, the text message 302 may include data (e.g., links) for accessing appropriate style information being stored at the publisher 308 and potentially at other locations (e.g., links included in the message provide access to fonts stored at the font service provider 312). Upon receiving the text message 302, operations can be executed by the recipient device to request needed style information (e.g., immutable style information, style features, etc. associated with a brand). For example, by using a link included in the received message, one or more files containing style information 320 can be sent to the recipient device (e.g., the smartphone 304) for presenting the contents of the text message 302. Similarly, font information may be provided in one or more files 322 to the recipient device (e.g., as initiated by links included in the text message). To appropriately control the distribution of style information, a style manager 324 is executed by a server 326 that is located at the publisher 308 (although the functionality of the style manager may be distributed across multiple locations in some arrangements). The style manager 324 may manage the style information (e.g., immutable style information, style features, etc.) for multiple brands. In managing the information, the style manager 324 may also apply conditions for allowing the information to be accessed. For example, conditions may include rules that grant access for a period of time, based on a subscription being valid, based upon one or more particular products or services being purchased, etc. As illustrated in the figure, style information 328 (which can be included in the file 320) is stored at the publisher 308 and is accessible by the server 326. Other architectures may be implemented for storing style information; for example, all of the information, portions of it, etc. can be stored at locations external to the publisher 308 (e.g., in a cloud-based architecture accessible by the publisher 308). In some instances, additional content may be provided with the style information (e.g., based upon the text message received at the recipient device) such as imagery, video, audio, etc. As illustrated in the figure, such content 330 may be stored at the publisher 308, however, the content may be stored at one or more other locations (e.g., in a distributed manner), such as multiple locations that include the publisher 308. In some arrangements, content delivery to a user device (or other type of recipient) may initiate the sending of style information (e.g., immutable style information, style features, etc.).

As illustrated in FIG. 2, software agents may be employed to provide or assist with some of the functionality provided by the environment 300. For example, a software agent (e.g., provided by the font service provider 312) may be executed by each user device (e.g., smartphones 100 and 304) to identify needed information and correspondingly initiate sending a request (e.g., for style information, style features, etc. from the publisher 308, font information from the font service provider 312, etc.). Operating in an autonomous manner (and in some instances also continuously), an agent is generally not inhibited by other processes (e.g., other agents) and may have the capability of learning through its functioning over a period of time. For example, the agent may repetitively monitor the text to be rendered on the user device and correspondingly request style information, font information, etc. as needed. Such functionality may also be provided, or partially provided, by the publisher 308, the font service provider 312, etc. For example, as style or font information is requested by the user device (e.g., by the text messenger 200 executed by smartphone 100), the publisher 308 or the font service provider 302 may determine which style and/or font information is needed by the device (e.g., by tracking the styles, fonts, etc. present at the smartphone, the capabilities of the device, etc.) and provide the information. In another arrangement, the font service provider 312 and the publisher 308 may work in concert (e.g., with other information sources) such that appropriate style and/or font information is provided to user devices.

In a typical text messaging interaction, a text message is created by one device (e.g., the smartphone 100) and is sent via a file (e.g., text message 302) to a recipient device (e.g., the smartphone 304) over one or more networks (e.g., the Internet 306, a wireless network, SMS systems, etc.). To create a message, style information which has been previously requested from and provided by the publisher 308 is selected for use by the operator of the device. Upon receipt of the message, operations are executed by the recipient device to prepare and present the stylized message; for example, style information is requested and received from the publisher 308 and corresponding font information included in the style information is requested and received from the font service provider 312. In some instances the style information may already be present at the recipient device, thereby removing the need to request the information from the publisher 308. In some arrangements, based upon the style information received, operations may be executed at the device to determine (e.g., estimate, speculate, etc.) other font information that may be needed in the near future. For example, an agent executed at the recipient device may monitor the data present at the device for presenting particular characters of a font. Based upon the characters present, the agent may determine which characters would soon likely be needed. For example, rules may be checked (e.g., is the most used character, "e", present for this font?) to identify one or more characters to request from the font service provider 312. Such subsetting and incremental subsetting techniques are described in "Network Based Font Management for Imaging Devices", United States Patent Application Serial No. 13/692,593 filed on December 3, 2012, the entire contents of which are hereby incorporated by reference. Similarly, agent actions may be used for requesting other types of style information, for example, based upon the types of styles previously selected by a user (e.g., a style associated with particular brands) the agent may identify similar styles and accordingly send a request (or requests) to the publisher 308. Upon receiving the text message file 302, the recipient device can interrogate the file and appropriately request style information as needed (e.g., one or more font characters from the font service provider 312, style information from the publisher 308, etc.). In some instances subsets of information (e.g., font characters) in an incremental manner to complement previously received data (and reduce redundant transmissions).

Software agents (e.g., as illustrated in FIG. 2) can perform operations for user devices that transmit messages, recipient user devices, etc. Typically, a message-initiating user device has style information residing on the device (e.g., a complete graphics, font set, etc. was previously requested, attained through use of a QR code, etc.). Upon initiating transmission of a created message (e.g., a user presses a displayed "send" radio button), an agent executed on the user device may scan the message and collect various information for assisting with efficient rendering of the message on a recipient device (or multiple recipient devices). The agent can determine what particular style information will be needed by the recipient device(s) (e.g., graphics, fonts, font character subsets, etc.) and send a message to one or more style information sources (e.g., the publisher 308, the font service provider 312) as an alert to prepare the information since a request for the information may soon be received (at the style information source(s)). By sending such an alert, style information can be appropriately prepared before being requested from the recipient user device, thereby improving message transmission efficiency. In some arrangements, the alerting agent may also instruct the style source (e.g., the publisher 308, the font service provider 312) to send the needed style information to the recipient user device. By removing the need for a request from the recipient device, efficiency is further improved as less information would be requested from recipient user devices and request traffic would reduce. Agent operations may also be executed at one or more recipient devices to attain needed style information. For example, upon receiving a message transmitted from a user device (e.g., the device that created the message), an agent executed at the recipient device may scan the message and identify needed style information. One or more requests may be sent to information sources (e.g., the publisher 308, the font service provider 312) to initiate the transmissions of the needed style information. In another arrangement, content (e.g., audio, video, multi-media content, etc.) may be sent to a recipient device (or multiple devices) and the transmission source of the content may identify needed style information and initiate the transmission of the style information to the recipient device(s). For example, content (e.g., a sequence of content packets, data stream such as a stream of video content, etc.) may be sent from a content source (e.g., the publisher 308, the font service provider 312) and style information (e.g., graphics, fonts, font subsets, etc.) may be identified and sent with the content or through a separate communication channel. In some arrangements, multiple sources may operate in concert to provide such a data stream to one or more recipient devices. For example, a publisher may provide a stream of content (e.g., audio, video, multi-media content, etc.) to the recipient device(s) while a font service provider provides needed font information (e.g., fonts, characters, font subsets provided in an incremental manner, etc.).

In some arrangements, predictive operations may be executed at one or more locations to identify style information in advance of need. For example, upon a series of messages being exchanged between two or more user devices, predictive operations (e.g., executed by the publisher 308, the font service provider 312, etc.) can identify future needs such as graphics, fonts, font characters, font subsets, etc. Such predictive operations may utilize style information present at one or more of the devices. For example the presence of fonts, font characters, etc. may be monitored at each user device to predict style information that may be soon needed (e.g., font characters to complete a font set). In some instances, predictive operations may be executed using the message content exchanged (e.g., identify font characters already present at a user device from messages and provide characters not yet used in a message, incrementally send font characters based on previously used characters, etc.), or predictions may be made independent of message content (e.g., send font characters that have a historically high frequency of use, etc.). Similar methodologies may also be utilized.

In some arrangements, the style information sources may also execute operations to determine the data that should be provided to a user device (e.g., smartphone 100). For example, the style manager 324 executed at the publisher 308 may monitor brand styles present and accordingly send style information. The font service provider 312 may perform similar operations by monitoring the fonts, font characters, etc., present at a user device (e.g., the smartphone 100). For example, the font service manager 316 may determine that a certain percentage of font characters (e.g., 90%) are present at a user device and initiate the transmission of the remaining 10% to complete the font set (without any request being sent from the device). The font service provider 312, a software agent (being executed at a user device), etc. operating alone or in concert may determine the fonts, font characters, etc. being supported by the user device and appropriate initiate transmission of lacking fonts, font characters, etc. if one or more thresholds are broached.

While style information may be provided to user devices in order to properly present text messages, such style information may also be provided for other types of content presenting applications. For example, content 330 stored at the publisher may be sent (e.g., broadcast) to one or more devices and include style information as needed for presenting the content. For instance, content may be sent in a sequence of data packets (e.g., a data stream) to present content, such as video, audio, graphics, etc., to an viewer (of a user device). Style information may be incorporated into the sequence of content packets to enhance the content presentation. Such style information may also be selected for downloading from the publisher 308, the font service provider 312, etc. For example, prior to preparing a text message, a user may interact with an interface of the text messenger 200 (or another application) in order to select one or more styles (associated with one or multiple brands) and initiate the downloading of the corresponding style information to the user device (e.g., smartphone 100). Such interactions may initiate a request being sent to the font service provider 312 for appropriately downloading one or more fonts as determined from the user selections. Similar to using an interface provided by the text messenger 200 to select a style for downloading, other vehicles may be utilized for style selection. For example, upon receiving and presenting a stylized message on a recipient device (e.g., smartphone 304), a user can interact with the message to initiate the downloading of the style. For the situation in which the style information is downloaded for presenting the message (as initiated by a link included in the stylized text message), user interaction with the message may result in the style information being installed (e.g., stored) on the device for local operations (e.g., creating a message that is infused in this style).

By downloading different styles and related information, a style library may be initiated, grown and shared with others. For example, by sending a text message that employs a particular style (e.g., associated with product or service brand), the recipient may be encouraged to request the style for themselves and propagate the style to still more users (e.g., by sending individual messages, broadcasting messages to many users, etc.). Along with collecting different style types through use, operations of the text messenger 200, the publisher 308, etc. may assist with developing such style libraries. For example, the text messenger 200, an agent, etc. executed by the smartphone may monitor the locally residing styles and may recommend additional styles that may be downloaded from the publisher 308 or from other sources. Recommendations may also be based upon other information such as characteristics, demographics, geographic location, etc. of the user (e.g., based upon one or more user profiles stored at the device, publisher 308, etc.). Along with assisting the requesting of styles, the text messenger 200 may also perform library functions such as deleting, moving, manipulating style information locally stored at the device. As such, libraries of immutable style information, style features, etc. may be developed and used to access such brand-related information for use in text messages. Such functionality may also be utilized for architectures in which the style information is stored by using one or more remotely located computing devices (e.g., servers) such as in a cloud computing system.

Along with providing style information to user devices and other types of computing devices, the publisher 308 interacts with style owners (and/or their agents) to collect information representative of the style (e.g., graphics, video, audio, color templates, etc.). Additionally, the brand owner 310 may provide other information to the publisher 308 that is associated with the use of this style information. For example, conditions can be provided to control user access to style information (e.g., immutable style information, style features, etc.). For example, one or more restrictions may control access based upon factors such as user characteristics (e.g., age, user profile information, etc.), periods of time (e.g., an access period), geography (e.g., restrict use to particular regions), one or more business rules (e.g., check for a valid and active subscription, etc.), device capabilities (e.g., user device model, display size and resolution, etc.). Conditions may also include temporal aspects; for example, users may be granted access to style information associated with a product that is marketed over a particular time period (e.g., the run up period until a motion picture is released, the period the motion picture is in theaters, the season of a television series, etc.). Similar to restrictions, incentives may be used.

One or more techniques may be utilized for interacting with style owners (and/or their agents) for exchanging such information with publishers. For example, various types of editors, interfaces, wizards, software suites etc. may be utilized to assist with providing, selecting, etc. graphics, such as colors, imagery, video, audio, fonts and other types of stylistic features. Typically the style owners interact primarily with the publishers, however, in some arrangements the information may be exchanged with other entities (e.g., the font service provider 312) for preparing style information that may be accessible by end users. Along with providing information (e.g., selecting graphics and fonts), the style owners may also receive information from the environment 300. For example, as style information is employed in text messages, feedback data may be provided to the style owners for monitoring use and further analysis (e.g., determine if the brand is gaining traction in a marketplace, with a particular type of user, etc.). Such feedback (e.g., text message sender identification, recipient identification, etc.) may first be received by the publisher 308, font service provider 312, etc. and then forwarded to the style owner for potentially processing prior to delivery. In other arrangements, feedback data may be directly received by the style owners from end users (e.g., provided from smartphone 100 and 304). For example, agents being executed by user devices may collect and provide use data to the style owners. Operations associated with delivering and presenting text messages may initiate the sending of feedback information to the style owner. For example, when a recipient user device (e.g., smartphone 304) requests information from the publisher 308 and/or the font service provider 312, feedback information (e.g., an indication that the style is being used) may be provided to the style owner (or an agent of the style owner). Upon receiving this information, further analysis may be executed, for example; adjustments to style information may be initiated based upon user feedback. In some instances such feedback may assist with finalizing selections of style features. For example, different types of styles may be provided to a variety of users and based upon their feedback, particular feature variants may be selected for branding use by the style owner. Feedback may also assist with distributing style information; for example, based upon the feedback provided to the publisher 308 and/or the style owner 310, adjustments (e.g., restrictions) may be applied to the distribution of the style information (e.g., targeting particular user types for allowing access to the style information, identifying particular geographical regions, etc.).

Along with interacting with style owners (and potentially their agents), publishers, such as publisher 308, may use one or more techniques for providing style information to the user devices in need, that have requested the information, etc. For example, upon receiving a text message, the recipient user device (smartphone 304) may interact with the publisher (e.g., via a link in the text message) to request and retrieve needed information. Similarly, the text message may include information for the recipient user device to interact with the font service provider 312 (e.g., for retrieving one or more needed fonts, font characters, character subsets, etc., for presenting the content of the text message). The publisher 308 can also manage the resident style information 328 (e.g., that is locally stored). For example, as the style owner provides updated data (e.g., different graphics, use time periods, restrictive conditions, etc.), the style information 328 stored at the publisher 308 can be correspondingly updated (e.g., appended, added to, deleted, etc.) by the style manager 324. Various events may trigger updating; for example, feedback information regarding a brand, style information, style features, etc. may be received (e.g., by a brand/style owner) that contributes to having a brand updated (e.g., update/create new style information, style features, etc. associated with the brand). The feedback may be provided by one or more entities, for example, end users (via their devices), publishers, and other potential information sources. Such information may also be provided to other entities internal to the environment (e.g., the font service provider 312) or external to the environment. The publisher 308 may also manage data associated with users; for example, subscriptions for being allowed access to the stored style information may be managed (e.g., checked for valid subscriptions, request subscriptions renewals, etc.).

Interactions with the publisher 308 may also include exchanging data with the font service provider 312. For example, font information stored at the font service provider 312 may be updated as new materials (e.g., adjustments to font characters) become available (e.g., from font developers, etc.). However, information may also be sent to the font service provider (e.g., at a style owner's request) to adjust a font. In some instances, the update request may be sent from the publisher to the font service provider upon indication that style information is being used (e.g., a request from a user device is received at the publisher for the corresponding style information). Such update requests to the font service provider 312 can be initiated by the style manager 324, for communicating with the font service manager 316, both of which can be implemented in software, hardware, or a combination of software and hardware. Similar to the publisher and/or style owner, the font service provider may also receive feedback information based upon the exchanging of stylized text messages. For example, font characters and font character subsetting needs may be determined from information provided to the font service provider 312. Based upon the received information, the font service provider can determine and provide the needed font characters, character subsets, etc. to a user device. Feedback information may be provided to the font service provider 312 from one or more entities; for example, the publisher 308, the style owner (or agent of a style owner) 310, individual user devices, etc. may provide feedback individually or in one or more combinations. Font usage information can be of particular interest to the font service provider 312. Along with determining which fonts are used frequently, less frequently used fonts can be identified; usage trends and estimates can be calculated, etc. Such information can be useful in decisions about allowing access to fonts (e.g., setting subscription rates, etc.). In some arrangements, fonts can reside at the publisher 308 (rather than at the font service provider 312) and correspondingly font requests from user devices can be directed to the publisher. To attain usage information, feedback from the publisher 308 to the font service provider 312 would be needed. Such feedback regarding font usage (e.g., request for individual fonts, etc.) can assist the font service provider 312 in making determinations (e.g., providing similar fonts for availability, removing fonts from availability, adjusting subscription rates, etc.). The font service provider 312 may perform additional operations such as speculating which font sets, font characters, character subsets, etc. may be needed in the future based upon previously provided data and correspondingly send relevant data based upon these speculations. For example, if a relatively small portion of characters (e.g., less than 10%) are needed to complete a font set, the font service manager 316 may initiate the transmission of these remaining characters. In some arrangements, such proactive (or eager) loading techniques may be implemented, or alternatively techniques may be implemented that defer taking action until data is needed (e.g., lazy loading techniques).

Along with being capable of using different types of files and employing different types of data transmission techniques for exchanging text messages among the devices within the environment 300, various transmission techniques may be used for exchanging style information, font information, etc. For example, cloud architectures, distributed processing techniques, etc. can be implemented within the environment.

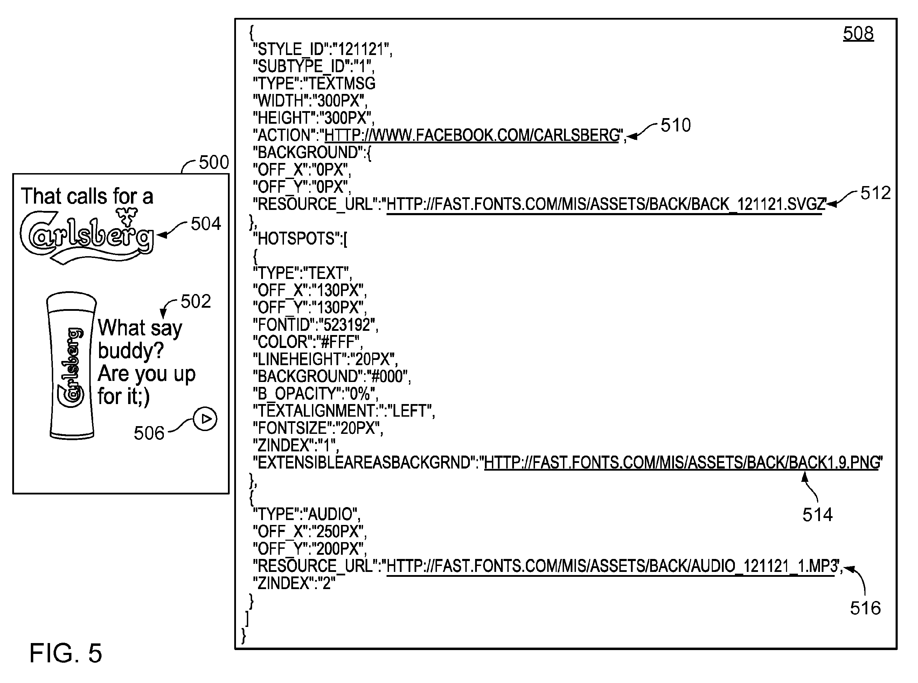

Referring to FIG. 5, a sample text message 500 incorporates style information of a particular brand (i.e., beverages of the Carlsberg Group of Copenhagen, Denmark). Along with including a portion for presenting the text content 502, the text message 500 also includes a graphical portion 504 that conveys graphics tied to the brand (e.g., a slogan and image). Based upon its proximity, a viewer is highly likely to see the brand information while reviewing the text content 502. Along with providing graphics associated with the brand, the text message also provides audio content (e.g., a jingle, promotional song, etc.) associated with the brand. In this example, the audio can be selectively played via a radio button 506 included in the text message 500. To provide such a text message, various types of files may be prepared at the user device where the text message is created. For example, files may employ a markup language, which generally defines rules to encode documents for various formats, such as extensible markup language (XML) that is applicable for Internet based messages. Markup languages used to create assets (e.g., web pages) such as HyperText Markup Language (HTML) along with cascading style sheets (CSS), that can define the look and layout of an asset, or other types of languages, protocols, etc. may be employed. A listing 508 of XML instructions for producing the text message is also illustrated in the figure. Along with including various instructions and parameters, message style features, fonts, etc. are represented by numerical identifiers. The listing also includes instructions for accessing this style information associated with the brand. For example, an instruction 510 provides a link (e.g., a uniform resource locator (URL)) to a social media website of the brand. In reaction to the viewer interacting with the presented text message 500 (e.g., clicking on the message with a pointing device such as a mouse), a website can be accessed and presented to the viewer (e.g., via a web browser being executed on the user device). The graphics, background images, etc. presented in the text message 500 are provided by instructions 512 and 514 for accessing files (e.g., a scalable vector graphics (SVG) file and a portable network graphics (PNG) file) residing at a remote data repository (e.g., located at a publisher). Additionally, the selectively playable audio content is provided by an instruction 516 that also accesses a remotely located audio file (e.g., that employs a digital audio format). One or more file formats may be implemented for providing such data. Generally formats that produce relatively small files that use less bandwidth are preferred. The ability to scale, reduce the effects of pixilation (e.g., overly large pixels), expandability, independence from HTML rendering, etc. may be considered in file format selection. The SVG file format may be employed for capabilities such as searching, indexing, scripting, and compression. Features of such a format can include nested transformations, clipping paths, alpha masks, filter effects, template objects and extensibility. For the SVG format, variants may be employed such as SVG Ting, SVG Basic, etc. for particular devices such as mobile devices (e.g., smartphones, etc.).

While this example code listing includes explicit code instructions for some parameters and other instructions that provide information through links, in some arrangements the instructions may be reduced by having just a few instructions (or event one) that provide a link (or other type of identifier) to invoke the gathering of the style information and text content for presentation. While this style information may be provided by one source (e.g., a single publisher), multiple sources may be employed (e.g., a publisher, a font service provider, a brand owner, multiple publishers, etc.) to attain the style information. Information sources may also be located at the user device; for example, one or more applications (e.g., mobile applications) executed by the user device may be utilized for attaining style information. In some instances, instructions provided by a text message may even initiate the execution of a local (or remote) application for gathering information for use in presenting the text message. For example, applications associated with e-commerce, audio and/or video playback, and other types of applications may be executed to assist information collection. Similar to accessing style information at different sources, using different access techniques, etc.; different types of style information may be included in a text message based upon the viewer, the viewer device, etc. For example, different style information may be presented if the viewer is a new purchaser (of a product or service), a previous customer, etc. Data provided by viewer profiles and user device capabilities may also drive the type of style information presented (e.g., a viewer who resides at a particular region of interest to a brand owner may be provided more multimedia content in a test message compared to other regions).

As represented in the sample text message 500, a portion of the presented information can be considered immutable while another portion of the information is mutable. To consistently present the stylistic information associated with the brand (e.g., colors, graphics, audio, etc.), the brand related information can be immutable and end users (e.g., that provide textual content to a message, a message recipient, etc.) are typically unable to change any of the immutable stylistic information. For example, stylistic features such as graphics associated with a brand logo, colors, font, etc. and other brand related features (e.g., a file containing an audio jingle for the brand, etc.) are generally immutable and cannot be adjusted by an end user. The mutable information provided with the message can be considered as content from an end user (e.g., the individual that creates the text message, replies to a message, forwards a message to others, etc.). For example, the textual content of the message can be created, edited, deleted, etc. by such an individual. As illustrated in the figure, the text content 502 (e.g., "What Say buddy? Are you up for it ;)") is mutable and can be adjusted as determined by an end user. Similar to immutable stylistic information and related features not being adjustable (e.g., an end user cannot change the presented brand name from "Carlsberg" to "Karlsberg"), other types of stylistic features and related data are immutable and cannot be adjusted by an end user. For example, one or more files (e.g., the graphic file storing the brand logo graphic, the audio file containing a brand jiggle, etc.) are generally immutable from being adjusted by an end user, end user device, etc. Correspondingly, files and other types of structures associated with the mutable portion of a text message (e.g., user created textual content, a user inserted image, photograph, data representing text that is stored in a file etc.) can be adjusted. Having an immutable portion and a mutable portion, the structure or structures (e.g., a file or files) that store the text message can be considered to have a fixed portion and a variable portion. Further, the variable portion can be modularized so that different content types can be embedded into a message. For example, one or more XML files used to define a text message and may include different modules depending upon the end user-provided content to be presented by the text message. For one message, a module (e.g., structure) may be included to store textual content to be presented by the message. In another message, an imagery module may be included in the file (or files) to present imagery (e.g., a picture, video, etc.) as message content, as determined by an end user. In still another example, the end user may be interested in providing audio to a message recipient (or recipients) and a module may be included in the file (or files) to provide an audio file, a link to an audio file, etc. Other techniques may similarly be employed to provide a fixed structure (or structures) to provide immutable information associated with a brand and flexible structures to provide mutable information (e.g., that can be created, adjusted, etc.) that may be related or unrelated to the immutable information.

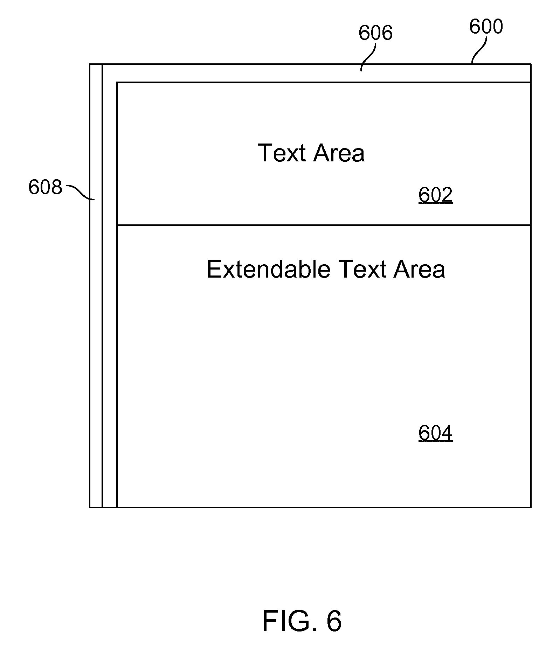

Referring to FIG. 6, an example text message template 600 is presented that generally includes two areas for entering text. A first text area 602, located in the upper portion of the template, is where text would in initially entered. A second text area 604, located below the first test area 602, allows for additional text to be entered and thereby extend the amount of text that can be sent and presented to a viewer. In this arrangement, the first text area 602 provides a maximum of 5 lines of text; however, more or less lines could be included. The second text area 604 provide more lines than the first are 602; however, less or an equal number of lines may be included in the second text area. Along with text, other content may be included in the areas 602 and 604; for example, imagery (e.g., pictures, video, etc.), links to audio (e.g., a radio button to initiate audio playback), etc. may be included. In some arrangements a single item of content (e.g., image, audio link, URL, etc.) may be included in a message; however, in some arrangements, multiple contents may be included in a message. Positioning of an item may depend upon the type of content in some situations. For example, emoji's are typically positioned inline with textual content; however, in some arrangements graphical objects like emoji's are not restricted to such positioning within the message.

To assist with viewing the presented text, one or more areas clear of text may be included in the template; for example, one area 606 provides a padding area for the presented text and another area 608 defines a boundary for the message template 600 (e.g., to allow for selection by a pointing device). In one arrangement, the padding area 606 may be on the order of 12 pixels wide while the area 608 may be 10 pixels wide. The first text area 602 may be approximately 340 pixels in the horizontal direction and 120 pixels in the vertical direction. The second text area may be 340 pixels in the horizontal direction and 340 pixels in the vertical direction.

Along with providing content for presenting to a message viewer, other types of functionality may be provided. Viewers can interact with the messages in some instances. For example, links to resources (e.g., URL of an entity whose brand is presented in the message) may be presented in a message and selected through view interactions (e.g., selecting with a pointing device). In some arrangements applications, processes, etc. may be executed by the user device (e.g., smartphone) to assist with presenting the resource (e.g., a web browser may be executed upon the URL being selected). In some arrangements, default applications may be executed to perform the operations. A viewer may indicate their interest in a resource (e.g., by selecting to bookmark the resource) through interactions with the message. Different types of interactions may also be indicative of different operations to be executed. For example, brief interaction with a display, button, etc. (e.g., a "short press" or "short tap") may indicate certain operations (e.g., highlight content for selection) while a relatively longer interaction with the display, button, etc. (e.g., a "long press") - lasting for a second or two, for example, may indicate other operations (e.g., copy, paste, delete, etc.). In some arrangements, such interactions may redirect the viewer to other content (e.g., an application installation screen, an account/password entry screen, an age verification screen, etc.) that calls for further interactions prior to presented content of interest. Information may also be provided to viewers, message creators, etc. without interactions with the user computing device. For example, various type of notifications can be provided (e.g., via messages, graphics, audio alerts, etc.) to indicate one or more conditions to the user. Indications may be provided that represent that a device is online (e.g., having an established network connection), is off line (e.g., a network connection is not active), etc. Notifications may also indicate the status of messages and such notification can change as the message status changes (e.g., one indication for the arrival of a new message, another indication of the message being read, etc.).

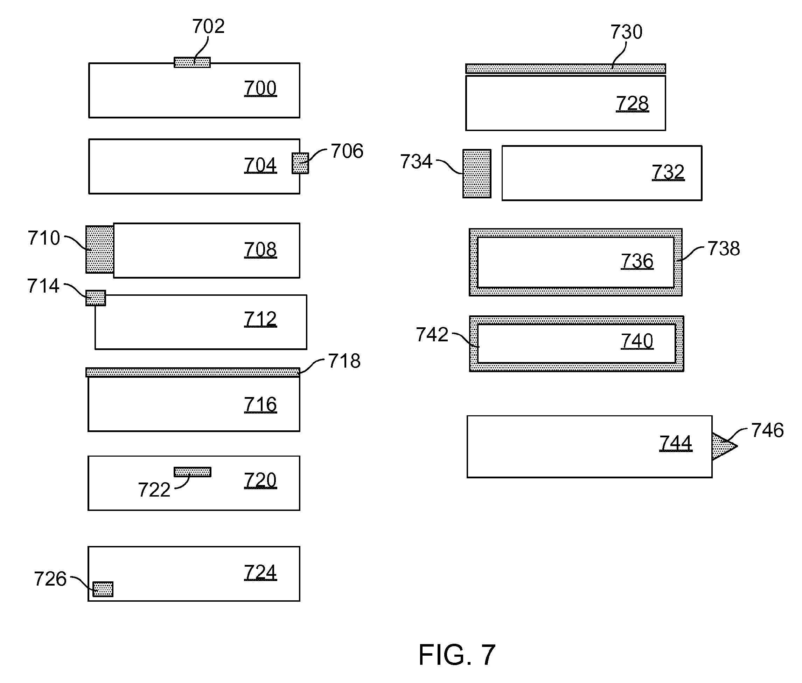

Referring to FIG. 7, along with the content being placed within the text message template (e.g., text, imagery, links to audio, etc.), graphics may positioned at other locations associated with the message template. For example, one or more logos or other graphics associated with a brand, entity, product, etc. may be positioned on the template. As illustrated in the figure, graphics may be positioned on the periphery as shown by message template 700 (graphic location 702), template 704 (graphic 706), template 708 (graphic 710), template 712 (graphic 714), and template 716 (graphic 718). Rather than the periphery, graphics may also be positioned within the text message template (e.g., template 720 (graphic 722), template 724 (graphic 726). Logos and other type of graphics can also be positioned external to a message template as illustrated by template 728 (graphic 730) and template 732 (graphic 734). Such graphics can also be positioned long the perimeter of a message template, for example, an external perimeter (e.g., template 736 and graphic 738), an internal perimeter (e.g., template 740 and graphic 742). In still another arrangement, graphics may be located at the end of the message template as illustrated by template 744 and graphic 746.

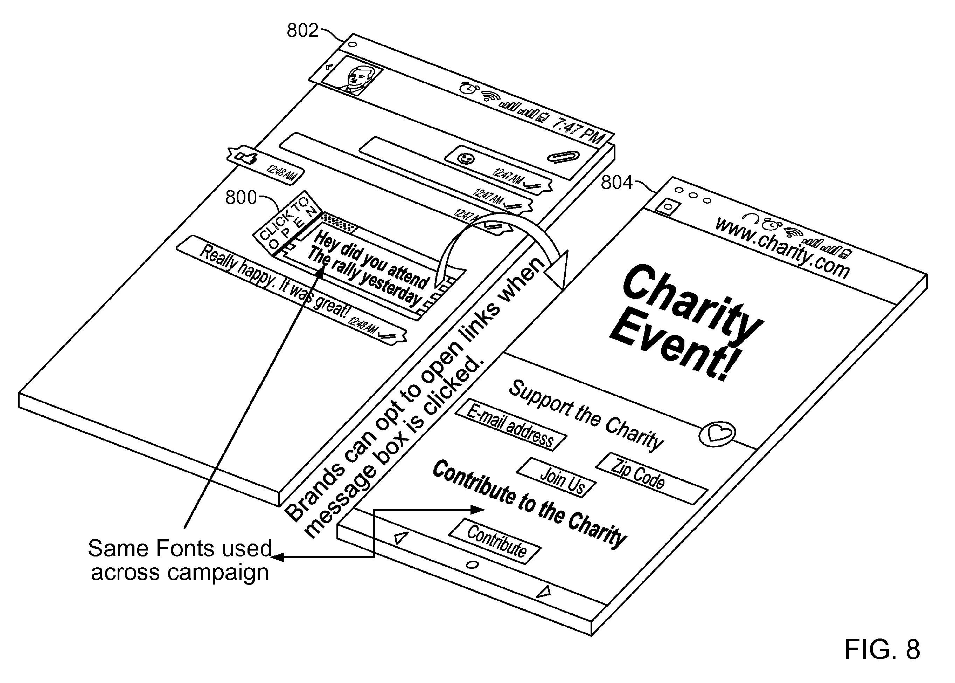

Referring to FIG. 8, an example text message 800 is presented in a text messenger interface 802 that incorporates style features of a web site 804. Along with using a similar color template, a common font is used in the website asset 804 and in the text message 800. Should the recipient of the text message become interested in learning more about the companion website, the instructions in the text message 800 direct the viewer to the corresponding website after user interaction (e.g., if the viewer clicks on the message an Internet browser is executed on the viewing device (e.g., smartphone) and the companion website is accessed and presented). Such interactions with the text message 800 may also initiate other actions; for example, by interacting with the text message 800 (e.g., again, by clicking on the message with a pointing device), the viewer may be offered to select the style information for downloading onto the user device for use (e.g., allow the viewer to create and send text messages that use the features of the style information).

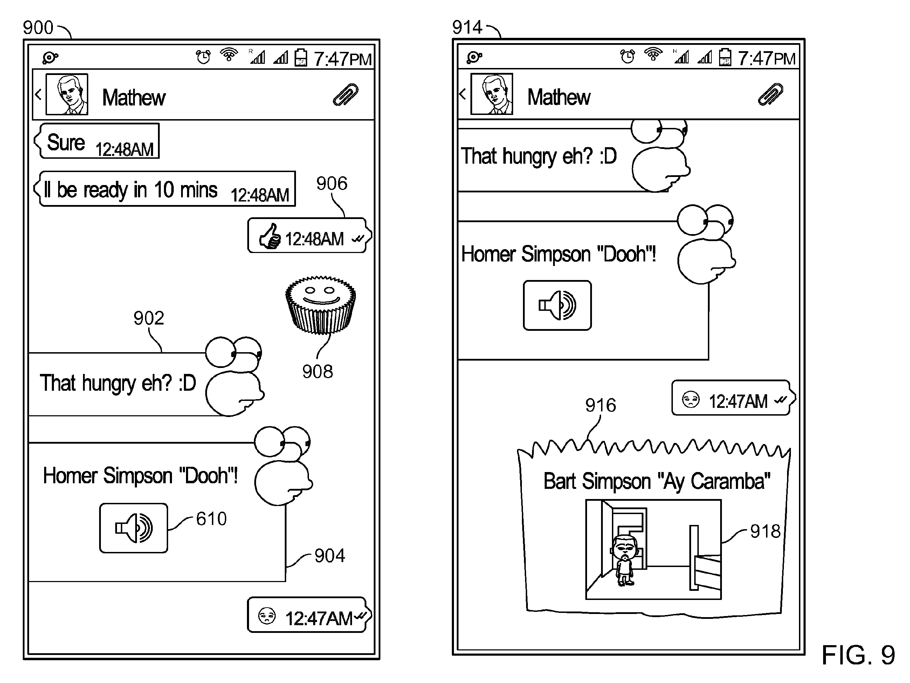

Referring to FIG. 9, along with employing the style information of a particular brand, text messages may be created that include multimedia content that may or may not be associated with the brand. In this illustrated example, a text messenger interface 900 is shown to include a series of stylized messages 902, 904 that are created using graphical features (e.g., a character's face, a color scheme, font, etc.) associated with a popular animated television series. While the user of the device presenting the interface 900 has access to this style information (of this brand) to create messages (as illustrated by the messages on the left side of the interface), the recipient device does not have access to this style information, as evident by the messages 906, 908 presented on the right side of the interface 900. Each of these messages 906, 908 simply provide graphical images (e.g., referred to as emoji's, stickers, etc.) to convey a message (e.g., of agreement, happiness, etc.) and are absent any textual content. Along with creating the messages 902 and 904 by employing the style information of the brand, one message 904 also includes a graphical radio button 910 for accessing audio content (e.g., stored at a publisher site or other location) that is related to the brand (e.g., a common saying of a character in the animated television series). Continuing the messaging string in another interface 914, a text message 916 created by the recipient is presented (i.e., located on the right side of the interface 914) and indicates the style information of this particular brand has been downloaded onto the recipient's device (e.g., smartphone). Along with adopting a style associated with the brand (e.g., the same animated television series), the style information for this message incorporates graphical features of a different character of the series (e.g., the shape, color, etc. of the message resembles the head of another character) while still using the textual features (e.g., font type, size, coloring, etc.) associated with the overall brand. In this example, the text message also includes video content that may be selectively played back by the viewer (or that may simply be presented in an automated looping playback). One or more techniques may be employed for the recipient to be granted access to the style information and thereby create the text message 916. For example, the recipient may interact with one of the messages received from the other individual (e.g., click on message 904) and agree to conditions for using the style information (e.g., purchase a subscription, provide contact information for a mailing list, give feedback on the show, etc.). For another possible scenario, the recipient may directly contact a publisher, the brand owner, etc. and request access to the style information for use in creating text messages.

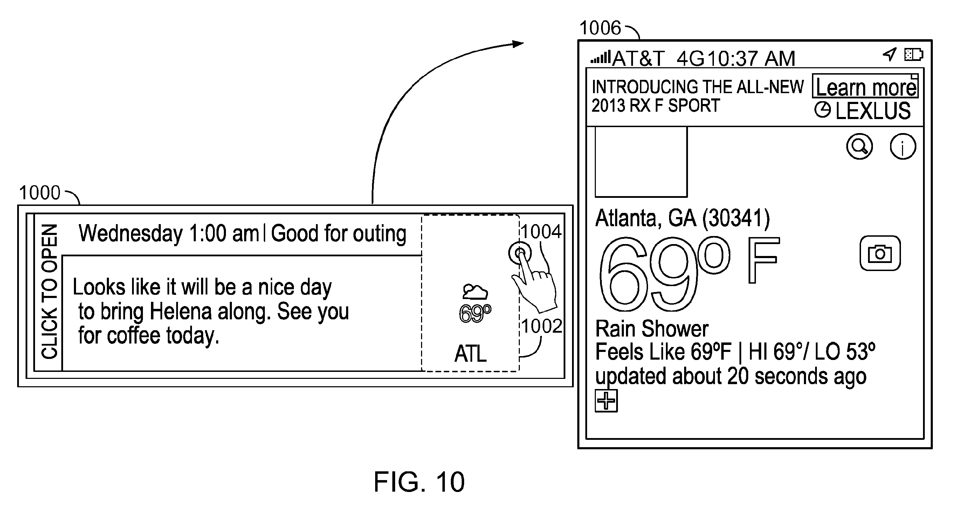

Referring to FIG. 10, an example text message 1000 is presented in which data is gathered from an application (e.g., being executed on the user device) for being displayed with the text message. In this illustration, a location (e.g., Atlanta) and weather conditions (e.g., temperature) are attained from the application and presented in a portion 1002. By providing this data, the viewer can be quickly made aware of local weather conditions while sending text messages without needing to pause execute a separate application and then review the weather data. Further, if the user of the recipient device also uses this particular style information for text messaging, the viewer can be alerted to the weather conditions being experienced by the recipient without requesting the information. Other types of functionality may also be provided by the employing this particular style information. For example, by interacting with the text message 1000 (as illustrated by the clicking symbol 1004), the related application (e.g., a mobile application associated with weather conditions) may be executed by the user device and an interface 1006 presented. Along with gathering and/or providing access to an application that provides text information (e.g., location, temperature, weather conditions, etc.), other types of information, media, etc. may be provided.

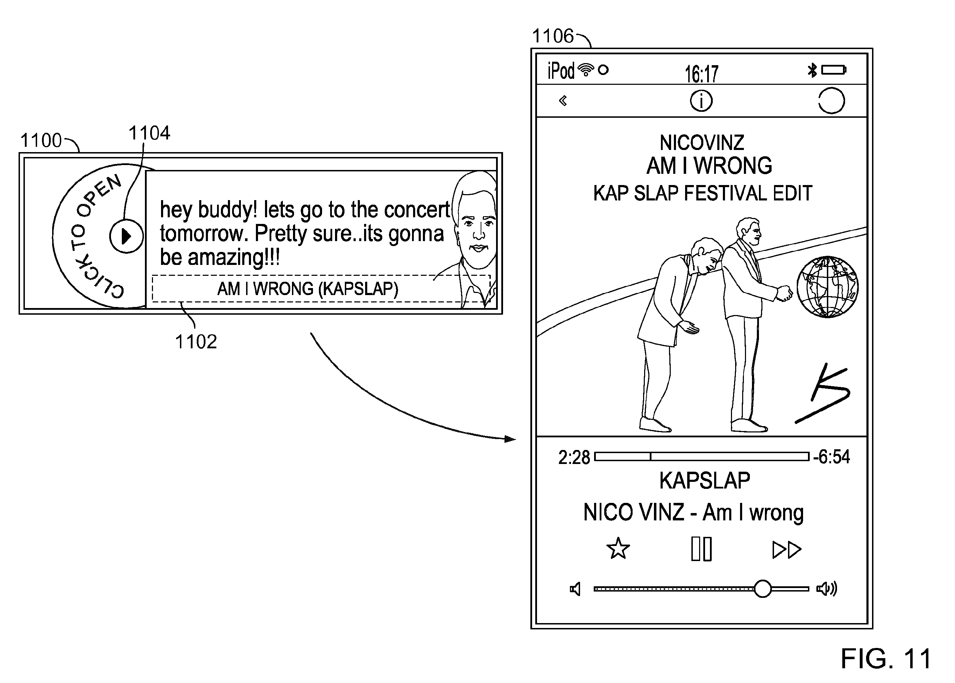

Referring to FIG. 11, another example text message 1100 is presented that is capable of initiating the execution of an audio player based upon interaction. In this particular example, the text message is infused with style features (e.g., imagery, graphics, a font) that is associated with a particular artist (e.g., band, singer, etc.). The message also includes a portion 1102 that identifies a particular song of the artist and when the viewer interacts with the text message (e.g., clicks upon a radio button 1104 included in the message), an audio player application is executed and a corresponding interface 1106 is presented to the viewer to control aspects of the playback (e.g., pause, fast forward, rewind, etc.). In some arrangement, aspects of the presented text message 1100 may dynamically adjust to provide the viewer with a selection of audio playbacks. For example, the song represented in the message portion 1102 may cycle through song selections of an album, playback list created by a publisher, etc. Correspondingly, the viewer can make a selection by appropriately clicking upon the radio button 1104 to select the respective song for playback by the audio player and presentation in the interface 1106.

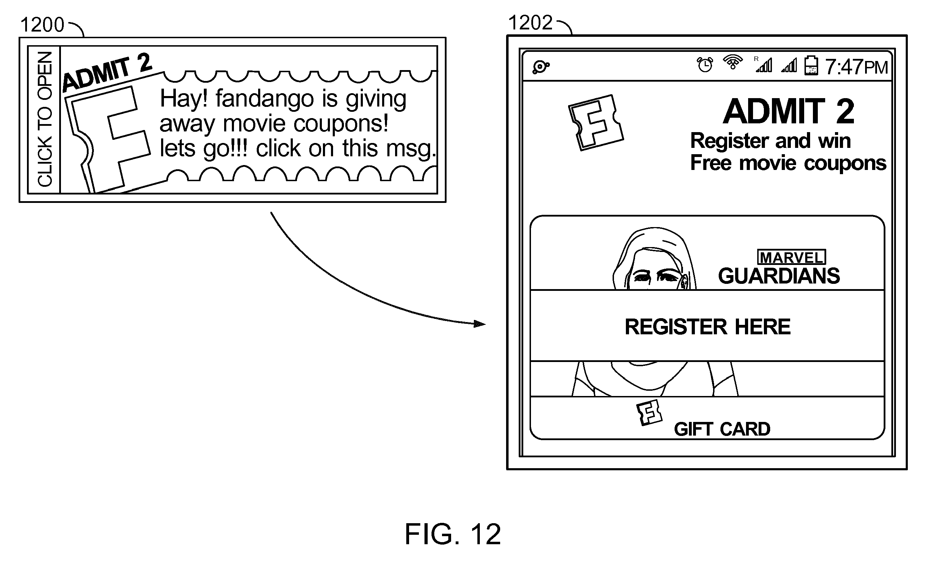

Referring to FIG. 12, various types of commercial activities (such as e-commerce) may also be provided through the use of stylized text messages. In this illustrated example, a text message 1200 employs stylistic features (e.g., font, color scheme, graphics) of an Internet-based service that provides information associated with motion pictures, tickets, theaters, etc. When the recipient of the message interacts with it (e.g., clicks on the message with a pointing device as instructed), a web site associated with the service is accessed and presented in an interface 1202 (on the message recipient's smartphone) for an e-commerce activity. In this example, the recipient can register for tickets through the interface 1202 of the service. In some arrangements brand owners may provide incentives to use message styles to further promote a brand. For example, a daily prize drawing (for movie tickets) may be offered. One entry into the drawing can be automatically generated for each message sent with a style associated with the brand being promoted.

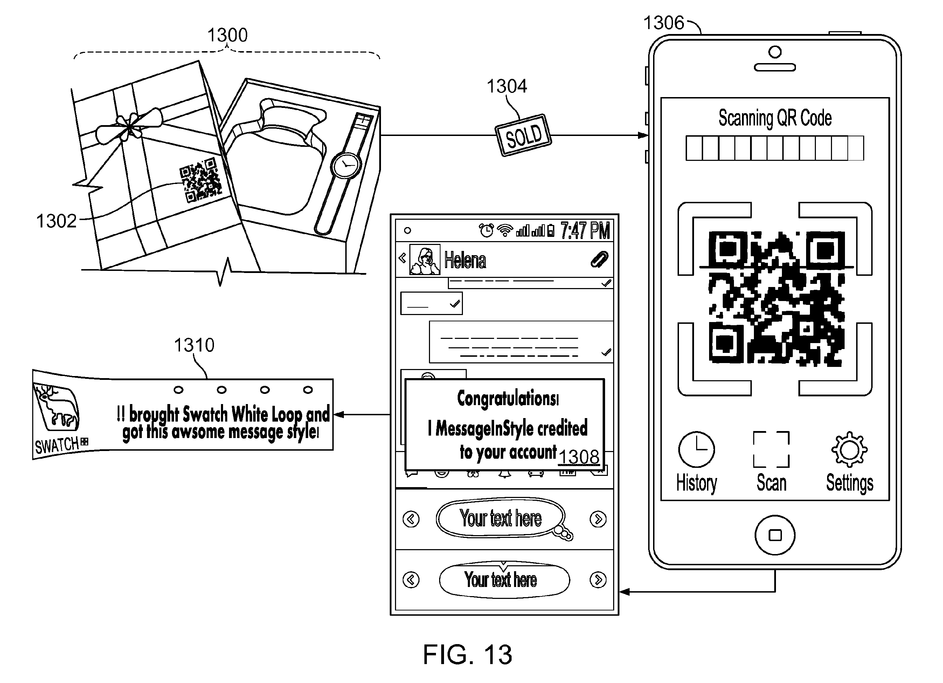

Referring to FIG. 13, commerce-based activities are illustrated that allow an individual access to particular style information (e.g., for created and sending stylized text messages) upon completing the purchase of a particular product, service, etc. In this illustrated example, a product 1300 that includes a two-dimensional barcode (e.g., a quick response (QR) code) 1302 is purchased by a consumer. Upon completion of the purchase (as represented by graphic 1304), the consumer is able to scan the barcode with his or her user device (e.g., a smartphone 1306) and use the information embedded in the barcode (e.g., upload the information to a website associated with the purchased product) to be granted access to stylized information associated with the product, manufacturer of the product, etc. For example, color schemes, graphics, fonts, etc. associated with the product, the packaging of the product, advertisements for the product, etc. may be employed to define the access style information. For instances in which a service has been purchased, a barcode, such as a QR code, may be printed on one or more documents (e.g., an invoice) associated with the purchased service. Upon being granted access, a message or similar indicator may be presented to the purchaser via an interface 1308 presented on the display of the user device 1306. Along with the message, data may be downloaded (e.g., from a publisher) to provide the style information and allow the purchaser to create text messages 1310 that incorporate the stylistic brand of the purchased product. In some arrangements, access to such style information may be restricted to purchasers of the corresponding product, service, etc. However, one or more other types of conditions, rules, etc. may be predefined in regards to allowing access to the style information. For example, the purchaser may be allowed to identify a small set of other individuals (e.g., five individuals) who may be granted access to the style information (or similar style information) upon one or more conditions being satisfied (e.g., the contact information of each individual is provided to the publisher, brand owner etc.) or no conditions being satisfied.

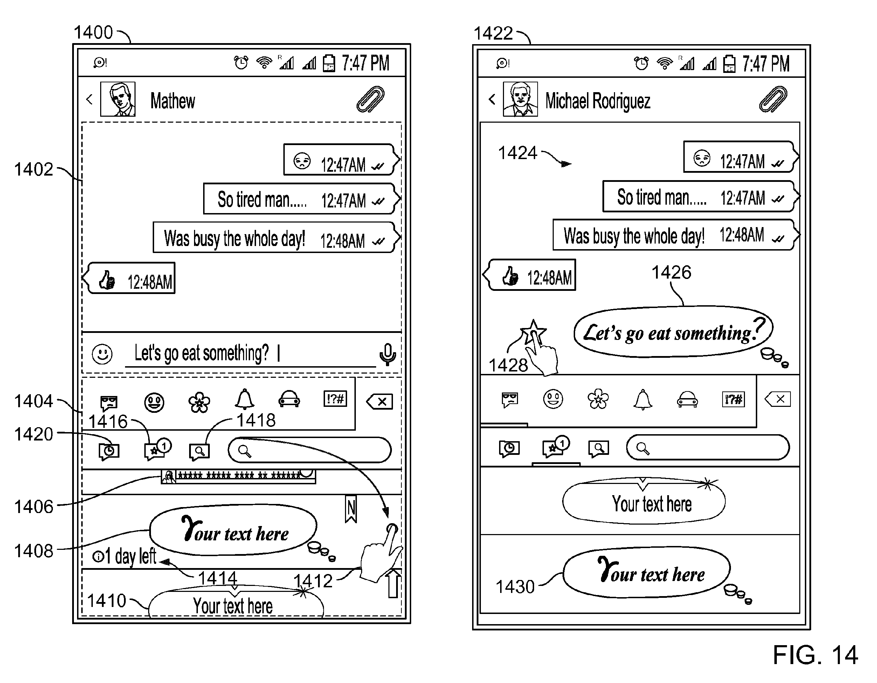

Referring to FIG. 14, various types of user interfaces may be employed to collect, manage, use, etc. style information from different creators, brand owners, etc. In this particular illustrated example, an interface 1400 includes two portions. An upper portion 1402 presents text messaging strings as messages are exchanged with another individual (or multiple individuals). The upper portion 1402 of the interface also includes an editor that allows the viewer to create and edit text messages prior to being sent (and placed into the message string). A lower portion 1404 of the interface 1400 provides the functionality for managing the style information present on the user device (e.g., the style features downloaded from a publisher, created on the device, etc.). One or more techniques may be employed by the lower portion 1404 to present listings of possible style features that can be utilized for creating text messages. For example, a scrolling list of sample messages (that all use a common phrase, e.g., "Your message here") can be presented to demonstrate each potential style type. In the figure, three potential types of style information 1406, 1408, 1410 (each associated with a different brand) are presented and additional styles may be presented through scrolling (as indicated with the icon 1412). Other graphics may be displayed regarding conditions associated with one or more of the style information instances; for example, an indicator may provide an alert regarding the amount of time remaining that the corresponding style information may be used (e.g., graphic 1414 notifies the user that style information 1408 may only be used for one additional day). Other types of functionality may also be provided by the interface 1410, for example, an icon 1416 can indicate which a particular style is currently being used for message creation, editing, etc. In some arrangements, upon selecting the icon (e.g., through user interaction) a listing of recommended styles may be presented in the interface (not shown). Such recommendations may be based upon user preferences, previously used styles, etc. Another icon 1418 can provide searching capabilities for identifying particular styles, brands associated with styles, etc. For still another function, an icon 1420 can be provided in the interface that can provide a listing of recently used styles to assist the user in quickly identifying previously used styles that were preferred by the user.

Along with management and use of selectable style information, functionality may be provided in an interface for selecting style information for downloading and local storage (for later retrieval and use). As shown in the figure, another interface 1422 is presented that illustrates selecting style information from a message (included in a string of exchanged messages 1424). In this instance, a stylized message 1426 is received by the user device and appropriately presented with alignment to the right side of the interface (to indicate the message has been received from the other individual taking part in the message exchange). As shown with a graphic 1428, the user may select the particular style for local storing (for later use to create messages). For example, the user may click with a pointing device on the message and the appropriate data would be requested from a publisher (or other source) for local storage. Once downloaded, the style information may be presented for use; for example, a sample message 1430, which employs the style information, may be inserted into a listing of other locally available styles.

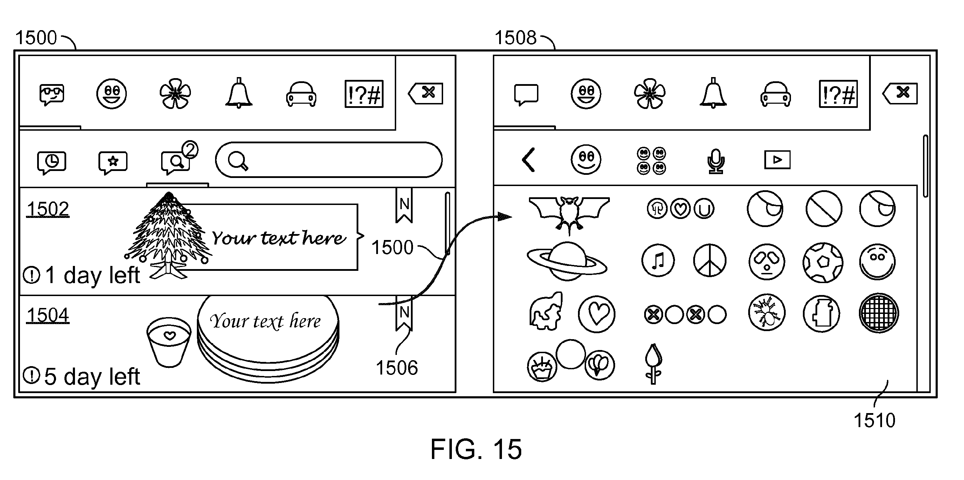

Referring FIG. 15, along with being able to create text messages that employ a selected style, other types of graphics may be prepared and provided to a user device for text message production. For example, different graphics, icons (e.g., emoji's, ideograms, etc.) maybe adjusted to adopt the stylistic features of a particular style. As illustrated in the figure, a portion of a text messenger interface 1500 is presented that allows a user to select a particular style for creating text messages. In this example, two particular selectable styles 1502 and 1504 are illustrated with sample messages (with each using a common phrase "Your text here"). The portion of the interface presenting the selectable style 1504 includes an icon 1506, which when selected by the user (using a pointing device) causes a new interface 1508 to appear that includes a listing of stylized graphics 1510 (e.g., referred to as constituents) that are displayed on the user device (e.g., a smartphone). Similar to selecting stylized characters, individual stylized graphics can be selected for inclusion in a text message being drafted by the user. In this particular example, each of the individual graphics share style features (e.g., colors, texture patterns, etc.) associated with a brand of cookies that is illustrated in the selectable style 1504.

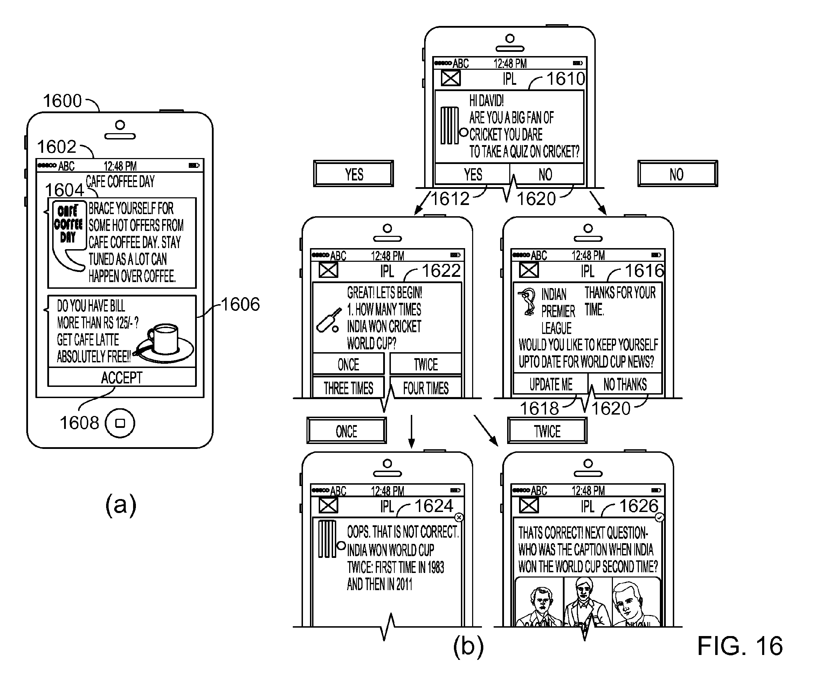

Referring to FIG. 16a, a stylized message may be prepared by an entity (e.g., business, corporation, etc.) that may be sent to one or more targeted individuals (e.g., that have previously interacted with the entity). Such messages may simply provide information to the recipient (e.g., be a one-way communication), solicit a response (e.g., sending of a reply message), or other action (e.g., the recipient may forward the message to one or more other individuals). In this illustrated example, a smartphone 1600 presents an interface 1602. A first stylized message 1604 includes graphics that reflect the brand features of the entity (e.g., logo, colors, etc. of a business) and provides information via this one-way communication to the recipient (e.g., a promotion alert). A second stylized message 1606 solicits a response from the recipient by including a selectable radio button 1608 with the message. In this particular instance, selection would send information to the source of message 1606 to indicate that the viewer has accepted the promotional offer.

Referring to FIG. 16b, multiple potential options may be provided by a stylized message to present various options and pathways to a viewer. In the illustrated example, multiple potential endpoints can be reached by a viewer based upon entered selections. An initial stylized message 1610 is received and present that allows a viewer to indicate whether they would like have an interactive session (e.g., take a quiz on a topic). One of two paths can be selected based upon the selection of one or two radio buttons 1612, 1614 presented in the stylized message 1610. In this example, if the viewer chooses not to participate, another stylized message 1616 is presented that asks if future interactions would be of interest (as provided by two selectable radio buttons 1618, 1620). Selecting to participate, another message 1622 is sent and presented that initiates the interactive session (e.g., quiz). In this instance, four possible answers are provided by four selectable radio buttons that trigger the send and presenting of corresponding messages if the selected response was correct or not (e.g., a stylized message 1624 presents information that an incorrect response was selected and another stylized message 1626 indicates that a correct response was chosen).

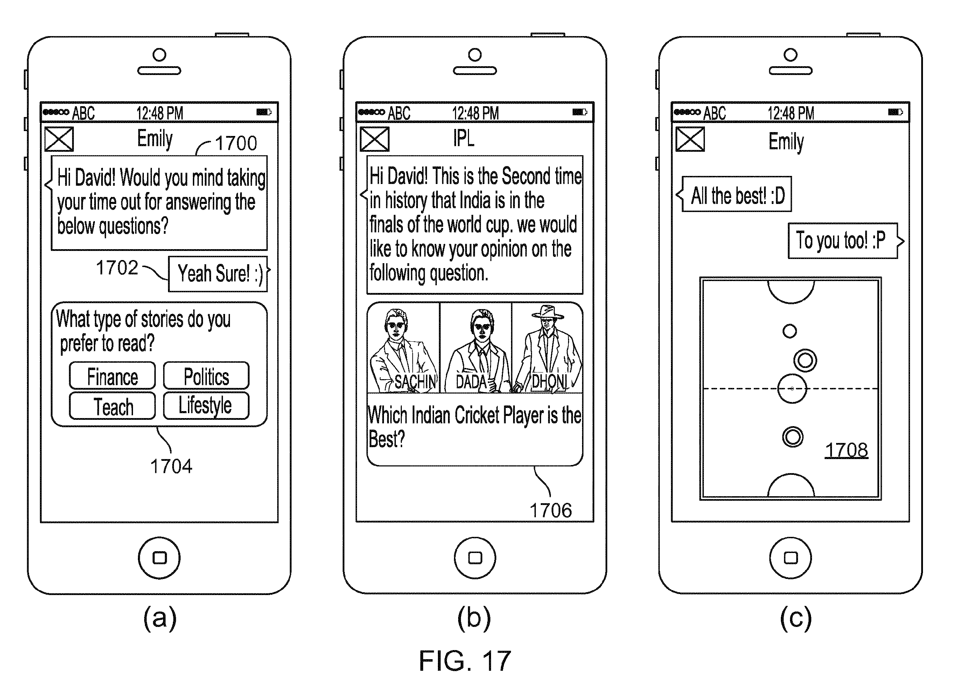

Referring to FIG. 17, various type of information may be requested and collected from one or more recipients of a stylized message or messages. For example, FIG. 17a presented a stylized message in which a recipient is queried about taking a survey. Upon indicating affirmatively with a response message 1702 (after being provided the query in a message 1700), survey questions are provided in a message 1704 that can be stylized. In this example, four selectable radio buttons are provided to allow the viewer to indicate a survey answer. Other types of interactive sessions may also be presented to a willing viewer. For example, referring to FIG. 17b, polling may be conducted for various topics. In this case, images of three individuals and textual content (e.g., their names) overlay selectable radio buttons included in a stylized message 1706. Aportion of the message also includes a question (e.g., "Which...is the best?") to guide the viewer into providing the solicited selection. Providing such imagery (e.g., a picture along with text) may assist a viewer along with improve polling efficiency or other types of question-and-answer information gathering sessions. Interactions between individuals may also be triggered by the content of stylized messages, for example, games or other types of skill-based interactions may be presented. Referring to FIG. 17c, a graphical representation of an air hockey game is presented in a stylized message 1708. By exchanging messages, the two individual can make strategic moves as the game progresses. In some instances, each computing device (e.g., smart phone) involved the game may execute one or more applications, processes, etc. to initiate game play. However, in some arrangements, operations may be executed on just one of the devices or by a remote computing device (e.g., a third party server) to control the game. This example illustrates game play between two individuals, however; more the two individuals may be included (e.g., by having three or more individuals participating in the same string of messages). In still another example, a single individual can be the sole game player interacting with stylized messages from a remote entity (e.g., a gaming Internet site). Various type of games may be incorporated into such stylized messages, for example; strategic based games (e.g., chess, checkers, fantasy football leagues, etc.), action based games (e.g., billiards), etc.

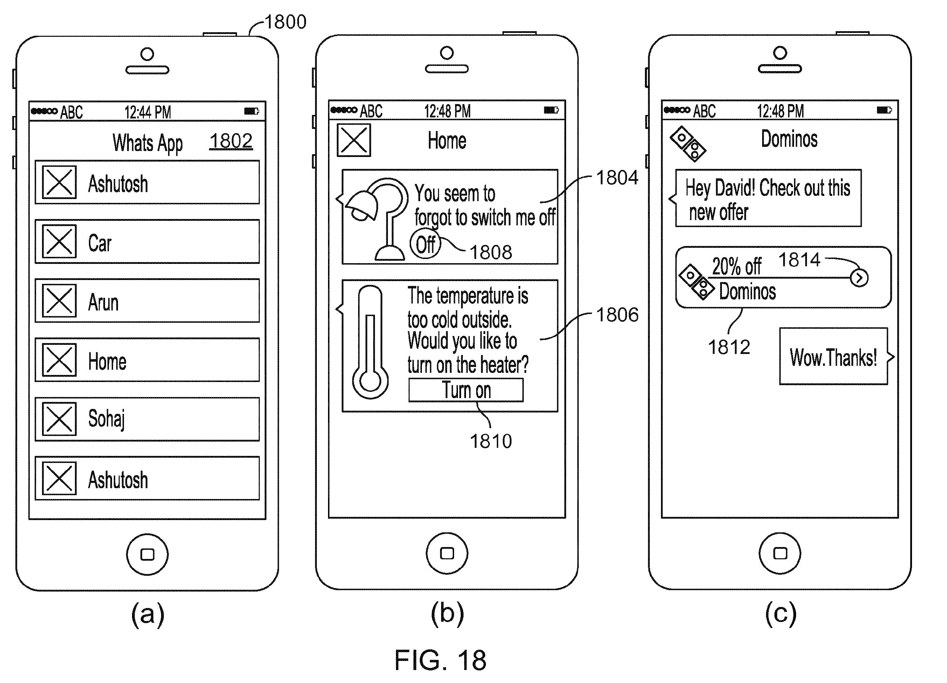

Referring to FIG. 18, other types of applications may employ such stylized messages. For example, similar to exchanging messages among individuals, stylized messages may be exchanged with objects such as physical objects that communicate in one or more networks. Such networks such as an Internet of Things (IoT) allow information be exchanged with physical object through the use of electronic circuitry, software, sensors, etc. Illustrated in FIG. 18a, a smart phone 1800 presents a list of contacts 1802 that includes both individuals and objects (e.g., a car and a home). Similar to selecting a particular individual to initiate a text message exchange, one or more objects may be selected. As shown in FIG. 18b, in some instances an object may initiate a message exchange. In this particular example, a computing device associated with the home of the smartphone user (i.e., labeled "Home" in the contact list) has been alerted to (or detected) some conditions and sent two stylized text messages 1804, 1806 to the smart phone user. Each message is stylized to include imagery associated with the brand of the object that triggered the message (e.g., brand of a lamp not switched off, brand of the home's heating system could be activated, etc.). Along with providing imagery associated with these brands, each of the messages also include selectable buttons to allow the user to interact with the objects. For message 1804, the user can interact with a selectable button 1808 to turn off the light. Through this interaction one or more signaling techniques may be employed to control the object. For example, a response text message may be sent to a computing device at the home which upon receipt of the message may send an appropriate control signal to the lamp. For message 1806, a similar selectable 1810 is included in the stylized text message 1806 for user interaction. Various types of interaction may be initiated upon the user interacting (e.g., pressing) this button 1810. A single command may be provided to the home's heating system (via a reply message, signal, etc.), further interactions may be initiated, etc. For example, one or more applications may be executed (e.g., by the smart phone, a home computing device, both, etc.) to present additional queries to the smart phone user (e.g., request temperature setting(s), select rooms to be heated, etc.). Provided this additional information (e.g., from a home computing device), the heating system may take appropriate action to attain the temperature of interest. In some situations, another stylized text message may be sent to the smart phone (or other user device(s)) to provide confirmation.

Referring to FIG. 18c, other technology such as security measures (e.g., cybersecurity techniques) may be incorporated into stylized text messages. This example illustrates that user interactions with such a stylized message is required prior to the user being presented additional information (e.g., a coupon, coupon code, etc.). A stylized text message 1812 is presented (after being received from an individual in this example) that includes graphics associated with a particular business entity and a selectable graphic 1814. By interacting with the graphic 1814 (e.g., pressing it), additional information is presented to the user. For example, a request for information (e.g., a promotional code, contact information, etc.) may be presented (e.g., via one or more data entry fields) prior to the user being provided the complete coupon information (e.g., using the display to present the coupon, defog the coupon, etc.). Through such techniques information may be gathered from potential customers and other types of individuals through such stylized text messages.

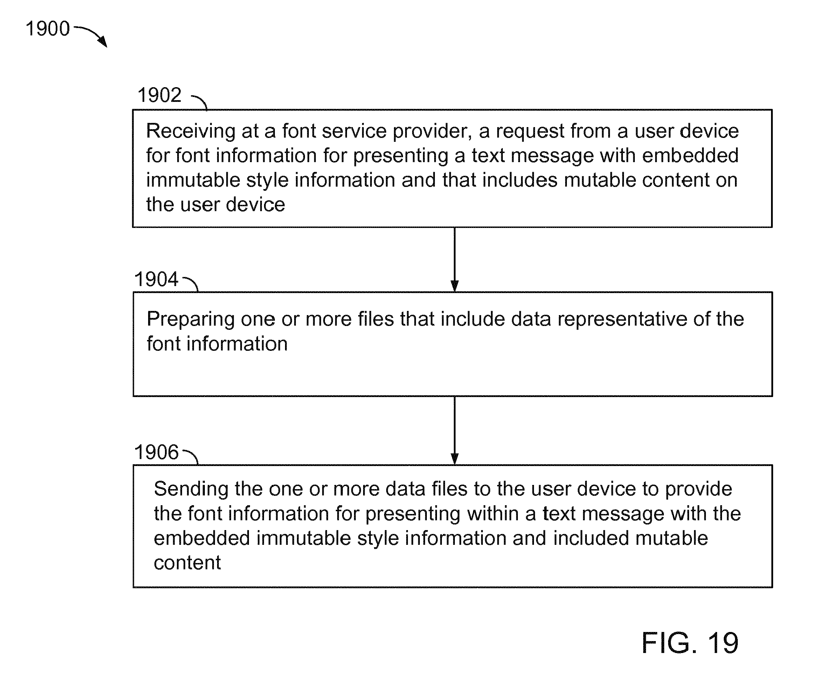

Referring to FIG. 19, a flowchart 1900 represents operations of a font service manager (e.g., the font service manager 316 shown in FIG. 3) being executed by a computing device (e.g., server 314 also shown in FIG. 3). Operations of the font service manager are typically executed by a single computing device; however, operations may be executed by multiple computing devices in some arrangements. Along with being executed at a single site (e.g., the location of a font service provider), the execution of operations may be distributed among two or more locations. In some arrangements, a portion of the operations may be executed at a publisher, one or more user devices, etc.

Operations of the font service manager may include receiving 1902 at a font service provider, a request from a user device for font information for presenting a text message with embedded immutable style information that includes mutable content on the user device. For example, one or more fonts, font characters, font subsets, etc. may be required. Operations may also include preparing 1904 one or more files that include data representative of the font information. For example, one or more files may be produced to provide a font subset needed to present the textual content included in the text message. Operations may also include sending 1906 the one or more data files to the user device to provide the font information for presenting within a text message with the embedded immutable style information and included mutable content. For example, the needed fonts, font characters, font subsets, etc. may be sent to the user device in need to appropriately present the text message.

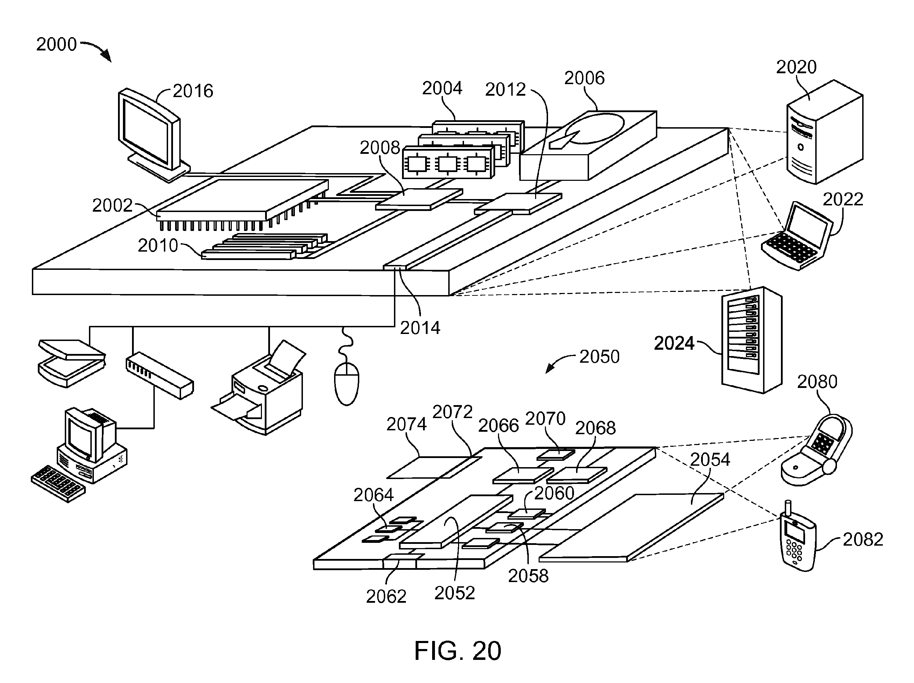

FIG. 20 shows an example of example computer device 2000 and example mobile computer device 2050, which can be used to implement the techniques described herein. For example, a portion or all of the operations of the text messenger 200 (shown in FIG. 2) may be executed by the computer device 2000 and/or the mobile computer device 2050. Computing device 2000 is intended to represent various forms of digital computers, including, e.g., laptops, desktops, workstations, personal digital assistants, servers, blade servers, mainframes, and other appropriate computers. Computing device 2050 is intended to represent various forms of mobile devices, including, e.g., personal digital assistants, tablet computing devices, cellular telephones, smartphones, and other similar computing devices. The components shown here, their connections and relationships, and their functions, are meant to be examples only, and are not meant to limit implementations of the techniques described and/or claimed in this document.

Computing device 2000 includes processor 2002, memory 2004, storage device 2006, high-speed interface 2008 connecting to memory 2004 and high-speed expansion ports 2010, and low speed interface 2012 connecting to low speed bus 2014 and storage device 2006. Each of components 2002, 2004, 2006, 2008, 2010, and 2012, are interconnected using various busses, and can be mounted on a common motherboard or in other manners as appropriate. Processor 2002 can process instructions for execution within computing device 2000, including instructions stored in memory 2004 or on storage device 2006 to display graphical data for a GUI on an external input/output device, including, e.g., display 2016 coupled to high speed interface 2008. In other implementations, multiple processors and/or multiple busses can be used, as appropriate, along with multiple memories and types of memory. Also, multiple computing devices 2000 can be connected, with each device providing portions of the necessary operations (e.g., as a server bank, a group of blade servers, or a multi-processor system).

Memory 2004 stores data within computing device 2000. In one implementation, memory 2004 is a volatile memory unit or units. In another implementation, memory 2004 is a non-volatile memory unit or units. Memory 2004 also can be another form of computer-readable medium (e.g., a magnetic or optical disk. Memory 2004 may be non-transitory.)

Storage device 2006 is capable of providing mass storage for computing device 2000. In one implementation, storage device 2006 can be or contain a computer-readable medium (e.g., a floppy disk device, a hard disk device, an optical disk device, or a tape device, a flash memory or other similar solid state memory device, or an array of devices, such as devices in a storage area network or other configurations.) A computer program product can be tangibly embodied in a data carrier. The computer program product also can contain instructions that, when executed, perform one or more methods (e.g., those described above.) The data carrier is a computer- or machine-readable medium, (e.g., memory 2004, storage device 2006, memory on processor 2002, and the like.)

High-speed controller 2008 manages bandwidth-intensive operations for computing device 2000, while low speed controller 2012 manages lower bandwidth-intensive operations. Such allocation of functions is an example only. In one implementation, high-speed controller 2008 is coupled to memory 2004, display 2016 (e.g., through a graphics processor or accelerator), and to high-speed expansion ports 2010, which can accept various expansion cards (not shown). In the implementation, low-speed controller 2012 is coupled to storage device 2006 and low-speed expansion port 2014. The low-speed expansion port, which can include various communication ports (e.g., USB, Bluetooth®, Ethernet, wireless Ethernet), can be coupled to one or more input/output devices, (e.g., a keyboard, a pointing device, a scanner, or a networking device including a switch or router, e.g., through a network adapter.)

Computing device 2000 can be implemented in a number of different forms, as shown in the figure. For example, it can be implemented as standard server 2020, or multiple times in a group of such servers. It also can be implemented as part of rack server system 2024. In addition or as an alternative, it can be implemented in a personal computer (e.g., laptop computer 2022.) In some examples, components from computing device 2000 can be combined with other components in a mobile device (not shown), e.g., device 2050. Each of such devices can contain one or more of computing device 2000, 2050, and an entire system can be made up of multiple computing devices 2000, 2050 communicating with each other.

Computing device 2050 includes processor 2052, memory 2064, an input/output device (e.g., display 2054, communication interface 2066, and transceiver 2068) among other components. Device 2050 also can be provided with a storage device, (e.g., a microdrive or other device) to provide additional storage. Each of components 2050, 2052, 2064, 2054, 2066, and 2068, are interconnected using various buses, and several of the components can be mounted on a common motherboard or in other manners as appropriate.

Processor 2052 can execute instructions within computing device 2050, including instructions stored in memory 2064. The processor can be implemented as a chipset of chips that include separate and multiple analog and digital processors. The processor can provide, for example, for coordination of the other components of device 2050, e.g., control of user interfaces, applications run by device 2050, and wireless communication by device 2050.

Processor 2052 can communicate with a user through control interface 2058 and display interface 2056 coupled to display 2054. Display 2054 can be, for example, a TFT LCD (Thin-Film-Transistor Liquid Crystal Display) or an OLED (Organic Light Emitting Diode) display, or other appropriate display technology. Display interface 2056 can comprise appropriate circuitry for driving display 2054 to present graphical and other data to a user. Control interface 2058 can receive commands from a user and convert them for submission to processor 2052. In addition, external interface 2062 can communicate with processor 2042, so as to enable near area communication of device 2050 with other devices. External interface 2062 can provide, for example, for wired communication in some implementations, or for wireless communication in other implementations, and multiple interfaces also can be used.

Memory 2064 stores data within computing device 2050. Memory 2064 can be implemented as one or more of a computer-readable medium or media, a volatile memory unit or units, or a non-volatile memory unit or units. Expansion memory 2074 also can be provided and connected to device 2050 through expansion interface 2072, which can include, for example, a SIMM (Single In Line Memory Module) card interface. Such expansion memory 2074 can provide extra storage space for device 2050, or also can store applications or other data for device 2050. Specifically, expansion memory 2074 can include instructions to carry out or supplement the processes described above, and can include secure data also. Thus, for example, expansion memory 2074 can be provided as a security module for device 2050, and can be programmed with instructions that permit secure use of device 2050. In addition, secure applications can be provided through the SIMM cards, along with additional data, (e.g., placing identifying data on the SIMM card in a non-hackable manner.)

The memory can include, for example, flash memory and/or NVRAM memory, as discussed below. In one implementation, a computer program product is tangibly embodied in a data carrier. The computer program product contains instructions that, when executed, perform one or more methods, e.g., those described above. The data carrier is a computer- or machine-readable medium (e.g., memory 2064, expansion memory 2074, and/or memory on processor 2052), which can be received, for example, over transceiver 2068 or external interface 2062.

Device 2050 can communicate wirelessly through communication interface 2066, which can include digital signal processing circuitry where necessary. Communication interface 2066 can provide for communications under various modes or protocols (e.g., GSM voice calls, SMS, EMS, or MMS messaging, CDMA, TDMA, PDC, WCDMA, CDMA2000, or GPRS, among others.) Such communication can occur, for example, through radio-frequency transceiver 2068. In addition, short-range communication can occur, e.g., using a Bluetooth®, WiFi, or other such transceiver (not shown). In addition, GPS (Global Positioning System) receiver module 2070 can provide additional navigation- and location-related wireless data to device 2050, which can be used as appropriate by applications running on device 2050. Sensors and modules such as cameras, microphones, compasses, accelerators (for orientation sensing), etc. may be included in the device.

Device 2050 also can communicate audibly using audio codec 2060, which can receive spoken data from a user and convert it to usable digital data. Audio codec 2060 can likewise generate audible sound for a user, (e.g., through a speaker in a handset of device 2050.) Such sound can include sound from voice telephone calls, can include recorded sound (e.g., voice messages, music files, and the like) and also can include sound generated by applications operating on device 2050.

Computing device 2050 can be implemented in a number of different forms, as shown in the figure. For example, it can be implemented as cellular telephone 1480. It also can be implemented as part of smartphone 2082, a personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor. The programmable processor can be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to a computer program product, apparatus and/or device (e.g., magnetic discs, optical disks, memory, Programmable Logic Devices (PLDs)) used to provide machine instructions and/or data to a programmable processor, including a machine-readable medium that receives machine instructions.

To provide for interaction with a user, the systems and techniques described here can be implemented on a computer having a device for displaying data to the user (e.g., a CRT (cathode ray tube) or LCD (liquid crystal display) monitor), and a keyboard and a pointing device (e.g., a mouse or a trackball) by which the user can provide input to the computer. Other kinds of devices can be used to provide for interaction with a user as well; for example, feedback provided to the user can be a form of sensory feedback (e.g., visual feedback, auditory feedback, or tactile feedback); and input from the user can be received in a form, including acoustic, speech, or tactile input.

The systems and techniques described here can be implemented in a computing system that includes a backend component (e.g., as a data server), or that includes a middleware component (e.g., an application server), or that includes a frontend component (e.g., a client computer having a user interface or a Web browser through which a user can interact with an implementation of the systems and techniques described here), or a combination of such back end, middleware, or frontend components. The components of the system can be interconnected by a form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the engines described herein can be separated, combined or incorporated into a single or combined engine. The engines depicted in the figures are not intended to limit the systems described here to the software architectures shown in the figures.

A number of embodiments have been described. Nevertheless, it will be understood that various modifications can be made without departing from the spirit and scope of the processes and techniques described herein. In addition, the logic flows depicted in the figures do not require the particular order shown, or sequential order, to achieve desirable results. In addition, other steps can be provided, or steps can be eliminated, from the described flows, and other components can be added to, or removed from, the described systems. Accordingly, other embodiments are within the scope of the following claims.

### ANNEX TO THE DESCRIPTION

1. A computing device implemented method comprising:
   receiving at a font service provider, a request from a user device for font information for presenting a text message with embedded immutable style information and that includes mutable content on the user device;
   preparing one or more files that include data representative of the font information; and
   sending the one or more data files to the user device to provide the font information for presenting within a text message with the embedded immutable style information and included mutable content.
2. The computing device implemented method of 1, wherein the request from the user device identifies one or more fonts for presenting the text message with the embedded immutable style information and included mutable content.
3. The computing device implemented method of 1 or 2, wherein the request from the user device is sent by a software agent executed by the user device.
4. The computing device implemented method of any of 1 to 3, wherein preparing the one or more files that include data representative of the font information includes determining whether to produce one or more character subsets.
5. The computing device implemented method of any of 1 to 4, wherein preparing the one or more files that include data representative of the font information includes producing character subsets in an incremental manner.
6. The computing device implemented method of any of 1 to 5, wherein preparing the one or more files that include data representative of the font information includes determining the amount of percentage of font characters currently supported by the user device.
7. The computing device implemented method of 6, wherein data representing remaining font characters is included in the one or more files if the percentage exceeds a predefined threshold.
8. The computing device implemented method of any of 1 to 7, wherein the immutable style information embedded in the text message provides access to audio content, video content or audio and video content.
9. The computing device implemented method of any of 1 to 8, wherein the immutable style information embedded in the text message advertises a brand.
10. The computing device implemented method of any of 1 to 9, wherein the immutable style information embedded in the text messages accesses an application being executed by the user device.
11. The computing device implemented method of any of 1 to 10, wherein the immutable style information embedded in the text messages initiates execution of an application at the user device.
12. The computing device implemented method of any of 1 to 11, wherein feedback is provided to the font service provider regarding the use of the font information in the text message.
13. A system comprising:
   a computing device comprising:
      a memory configured to store instructions; and
      a processor to execute the instructions to perform operations comprising:
         receiving at a font service provider, a request from a user device for font information for presenting a text message with embedded immutable style information and that include mutable content on the user device;
         preparing one or more files that include data representative of the font information; and
         sending the one or more data files to the user device to provide the font information for presenting within a text message with the embedded immutable style information and included mutable content.
14. The system of 13, wherein the request from the user device identifies one or more fonts for presenting the text message with the embedded immutable style information and included mutable content.
15. The system of 13 or 14, wherein the request from the user device is sent by a software agent executed by the user device.
16. The system of any of 13 to 15, wherein preparing the one or more files that include data representative of the font information includes determining whether to produce one or more character subsets.
17. The system of any of 13 to 16, wherein preparing the one or more files that include data representative of the font information includes producing character subsets in an incremental manner.
18. The system of any of 13 to 17, wherein preparing the one or more files that include data representative of the font information includes determining the amount of percentage of font characters currently supported by the user device.
19. The system of 18, wherein data representing remaining font characters is included in the one or more files if the percentage exceeds a predefined threshold.
20. The system of any of 13 to 19, wherein the immutable style information embedded in the text message provides access to audio content, video content or audio and video content.
21. The system of any of 13 to 20, wherein the immutable style information embedded in the text message advertises a brand.
22. The system of any of 13 to 21, wherein the immutable style information embedded in the text messages accesses an application being executed by the user device.
23. The system of any of 13 to 22, wherein the immutable style information embedded in the text messages initiates execution of an application at the user device.
24. The system of any of 13 to 24, wherein feedback is provided to the font service provider regarding the use of the font information in the text message.
25. One or more computer readable media storing instructions that are executable by a processing device, and upon such execution cause the processing device to perform operations comprising:
   receiving at a font service provider, a request from a user device for font information for presenting a text message with embedded immutable style information and that includes mutable content on the user device;
   preparing one or more files that include data representative of the font information; and
   sending the one or more data files to the user device to provide the font information for presenting within a text message with the embedded immutable style information and included mutable content.
26. The computing device implemented method of 25, wherein the request from the user device identifies one or more fonts for presenting the text message with the embedded immutable style information and included mutable content.
27. The computing device implemented method of 25 or 26, wherein the request from the user device is sent by a software agent executed by the user device.
28. The computing device implemented method of any of 25 to 27, wherein preparing the one or more files that include data representative of the font information includes determining whether to produce one or more character subsets.
29. The computing device implemented method of any of 25 to 28, wherein preparing the one or more files that include data representative of the font information includes producing character subsets in an incremental manner.
30. The computing device implemented method of any of 25 to 29, wherein preparing the one or more files that include data representative of the font information includes determining the amount of percentage of font characters currently supported by the user device.
31. The computing device implemented method of 30, wherein data representing remaining font characters is included in the one or more files if the percentage exceeds a predefined threshold.
32. The computing device implemented method of any of 25 to 31, wherein the immutable style information embedded in the text message provides access to audio content, video content or audio and video content.
33. The computing device implemented method of any of 25 to 32, wherein the immutable style information embedded in the text message advertises a brand.
34. The computing device implemented method of any of 25 to 33, wherein the immutable style information embedded in the text messages accesses an application being executed by the user device.
35. The computing device implemented method of any of 25 to 34, wherein the immutable style information embedded in the text messages initiates execution of an application at the user device.
36. The computing device implemented method of any of 25 to 35, wherein feedback is provided to the font service provider regarding the use of the font information in the text message.

## Claims

1. A computing device implemented method comprising:
receiving at a font service provider, a request from a user device for font information for presenting a text message with embedded immutable style information and that includes mutable content on the user device;
preparing one or more files that include data representative of the font information; and
sending the one or more data files to the user device to provide the font information for presenting within a text message with the embedded immutable style information and included mutable content.

2. The computing device implemented method of claim 1, wherein the request from the user device identifies one or more fonts for presenting the text message with the embedded immutable style information and included mutable content.

3. The computing device implemented method of claim 1 or 2, wherein the request from the user device is sent by a software agent executed by the user device.

4. The computing device implemented method of any preceding claim, wherein preparing the one or more files that include data representative of the font information includes determining whether to produce one or more character subsets.

5. The computing device implemented method of any preceding claim, wherein preparing the one or more files that include data representative of the font information includes producing character subsets in an incremental manner.

6. The computing device implemented method of any preceding claim, wherein preparing the one or more files that include data representative of the font information includes determining the amount of percentage of font characters currently supported by the user device.

7. The computing device implemented method of claim 6, wherein data representing remaining font characters is included in the one or more files if the percentage exceeds a predefined threshold.

8. The computing device implemented method of any preceding claim, wherein the immutable style information embedded in the text message provides access to audio content, video content or audio and video content.

9. The computing device implemented method of any preceding claim, wherein the immutable style information embedded in the text message advertises a brand.

10. The computing device implemented method of any preceding claim, wherein the immutable style information embedded in the text messages accesses an application being executed by the user device.

11. The computing device implemented method of any preceding claim, wherein the immutable style information embedded in the text messages initiates execution of an application at the user device.

12. The computing device implemented method of any preceding claim, wherein feedback is provided to the font service provider regarding the use of the font information in the text message.

13. A system comprising:
a computing device comprising:
a memory configured to store instructions; and
a processor to execute the instructions to perform operations comprising:
receiving at a font service provider, a request from a user device for font information for presenting a text message with embedded immutable style information and that include mutable content on the user device;
preparing one or more files that include data representative of the font information; and
sending the one or more data files to the user device to provide the font information for presenting within a text message with the embedded immutable style information and included mutable content.

14. The system of claim 13, wherein the request from the user device identifies one or more fonts for presenting the text message with the embedded immutable style information and included mutable content.

15. One or more computer readable media storing instructions that are executable by a processing device, and upon such execution cause the processing device to perform operations comprising:
receiving at a font service provider, a request from a user device for font information for presenting a text message with embedded immutable style information and that includes mutable content on the user device;
preparing one or more files that include data representative of the font information; and
sending the one or more data files to the user device to provide the font information for presenting within a text message with the embedded immutable style information and included mutable content.
